# EUROPEAN PATENT APPLICATION

(11) **EP 4 773 395 A1**
(43) Date of publication of application: **08.07.2026**
(21) Application number: 24878407.6
(22) Date of filing: 24.04.2024
(51) Int. Cl.: H01M 50/46, H01M 10/04

(54) **BATTERY CELL, BATTERY, ELECTRICAL APPARATUS, COMBINATION APPARATUS AND METHOD, AND PROCESSING DEVICE**

(30) Priority: 18.10.2023 CN 202311349034
(71) Applicant: Contemporary Amperex Technology Co., Limited, Ningde, Fujian 352100 (CN)
(72) Inventor: KONG, Pan, Ningde, Fujian 352100 (CN); LUO, Zhongping, Ningde, Fujian 352100 (CN); LIN, Wenfa, Ningde, Fujian 352100 (CN); TANG, Minghao, Ningde, Fujian 352100 (CN); ZHANG, Shengwu, Ningde, Fujian 352100 (CN); DING, Yu, Ningde, Fujian 352100 (CN); WEN, Yaoling, Ningde, Fujian 352100 (CN)
(74) Representative: Ziebig Hengelhaupt Intellectual Property Attorneys Patentanwaltskanzlei PartGmbB
(86) International application number: PCT/CN2024/089509
(87) International publication number: WO 2025/081754

(57) **Abstract**

The present application is applicable to the technical field of a battery (100), and provides a battery cell (10), the battery (100), an electrical apparatus, a combination apparatus (2100) and method, and a processing device (2000). The processing device (2000) is configured to process the battery (100), and includes the combination apparatus (2100). The combination method includes: driving the combination apparatus (2100) to combine and fix a part of a separator (113) to a first electrode plate (111) and/or a second electrode plate (112). The electrical apparatus includes the battery (100). The battery (100) includes the battery cell (10). The battery cell (10) includes an electrode assembly (11). The electrode assembly (11) includes the first electrode plate (111), the second electrode plate (112), and the separator (113). The first electrode plate (111) and the second electrode plate (112) are alternately stacked or are alternately stacked and wound. At least a part of the separator (113) is disposed between the first electrode plate (111) and the second electrode plate (112), and the part of the separator (113) is combined with and fixed to the first electrode plate (111) and/or the second electrode plate (112). In this way, only a part of the separator (113) is used for performing combination operation, and other parts of the separator (113) are not used for performing combination operation. In this way, a problem of poor overall air permeability of the separator (113) can be improved, helping to improve an ionic conducting capability of the separator (113), to improve kinetic performance of the battery cell (10).

## Description

### CROSS-REFERENCE TO RELATED APPLICATIONS

The present application claims priority to Chinese Patent Application No. 202311349034.7, entitled "BATTERY CELL, BATTERY, ELECTRICAL APPARATUS, COMBINATION APPARATUS AND METHOD, AND PROCESSING DEVICE" filed with the China National Intellectual Property Administration on October 18, 2023, which is incorporated herein by reference in its entirety.

### TECHNICAL FIELD

The present application relates to the field of battery technologies, and specifically, to a battery cell, a battery, an electrical apparatus, a combination apparatus and method, and a processing device.

### BACKGROUND

In the related art, a battery cell may usually include a housing and an electrode assembly disposed inside the housing. The electrode assembly mainly includes a positive electrode plate and a negative electrode plate that are stacked or are stacked and wound, and a separator is arranged between the positive electrode plate and the negative electrode plate.

In some cases, in a processing process of the battery cell, large pressure needs to be provided for the positive electrode plate, the negative electrode plate, and the separator, to perform a combination operation, so that the entire separator is combined with and fixed to the positive electrode plate and the negative electrode plate. However, in the combination process, the entire separator is under large pressure, so that air permeability of the separator is affected, further affecting charging and discharging performance of the battery cell, and affecting kinetic performance of the battery cell.

### SUMMARY

In view of the foregoing problem, an objective of embodiments of the present application is to provide a battery cell, a battery, an electrical apparatus, a combination apparatus and method, and a processing device, to relieve a technical problem of poor air permeability performance of separators.

The technical solutions used in the embodiments of the present application are as follows:
According to a first aspect, an embodiment of the present application provides a battery cell, including an electrode assembly. The electrode assembly includes a first electrode plate, a second electrode plate, and a separator, and the first electrode plate and the second electrode plate are alternately stacked or are alternately stacked and wound. At least a part of the separator is disposed between the first electrode plate and the second electrode plate, and the part of the separator is combined with and fixed to the first electrode plate and/or the second electrode plate.

In the battery cell provided in this embodiment of the present application, the part of the separator is combined with and fixed to the first electrode plate; or the part of the separator is combined with and fixed to the second electrode plate; or the part of the separator is combined with and fixed to the first electrode plate and the second electrode plate. In this way, only a part of the separator is used for performing combination operation, and other parts of the separator are not used for performing combination operation. In this way, a problem of poor overall air permeability of the separator can be relieved, helping to improve an ionic conducting capability of the separator, and further helping to improve charging and discharging performance of the battery cell, to improve kinetic performance of the battery cell.

In some embodiments, the first electrode plate includes a first current collector and a first active layer disposed in the first current collector, and the second electrode plate includes a second current collector and a second active layer disposed in the second current collector. The separator includes a first film material and a second film material disposed on an end side of the first film material along a first direction, the first film material is disposed separately opposite to the first active layer and the second active layer, and the second film material is located outside an end side of the first active layer and/or the second active layer along the first direction, and is at least partially combined with and fixed to the first electrode plate and/or the second electrode plate. The first direction is parallel to the first electrode plate and the second electrode plate.

In this way, a proportion of the first film material in the separator is large, in other words, a large part of the separator is not used for combination operation, and has good air permeability and a good ionic conducting capability, thereby improving the charging and discharging performance of the battery cell, to improve the kinetic performance of the battery cell.

In some embodiments, the first active layer extends beyond the second active layer along the first direction, and the second film material is located outside an end side of the second active layer along the first direction.

In this way, a problem that ions cannot be completely inserted into the first active layer after exiting from the second active layer can be relieved, and further, a problem that the ions accumulate outside of the first active layer and the second active layer and penetrate the separator, a problem of ion precipitation, and the like can be relieved.

In some embodiments, at least a part of the second film material is combined with and fixed to a part of the first active layer extending beyond the second active layer along the first direction.

In this way, combination and fixing between the second film material of the separator and the first electrode plate is implemented, so that insulation between the separator and both the first electrode plate and the second electrode plate can be maintained, and a problem that the first electrode plate and the second electrode plate overlap caused by failure of the separator in wrapping the electrode plate due to folding of the separator is relieved.

In some embodiments, one side or two opposite sides of at least a part of the first active layer extending beyond the second active layer along the first direction are combined with and fixed to the second film material.

In this way, the combination operation of the second film material and the part of the first active layer extending beyond the second active layer is very flexible.

In some embodiments, a part of the first active layer extending beyond one end of the second active layer along the first direction is combined with and fixed to the second film material; or a part of the first active layer extending beyond two opposite ends of the second active layer along the first direction is combined with and fixed to the second film material.

In this way, the first active layer can effectively deintercalate ions, thereby improving the charging and discharging performance of the battery cell, to improve the kinetic performance of the battery cell. Alternatively, a combination and fixing effect of the separator on the electrode assembly can be improved.

In some embodiments, the second electrode plate further includes an insulation layer disposed in the second current collector, and the insulation layer is disposed on an end side of the second active layer along the first direction, extends beyond the first active layer along the first direction, and is opposite to the second film material.

In this way, the insulation layer can achieve an insulation effect between the first active layer and the second current collector, and can further relieve a problem that the first active layer penetrates the separator and overlaps the second current collector.

In some embodiments, at least a part of the second film material is combined with and fixed to the insulation layer.

In this way, the separator can effectively achieve insulation between the first electrode plate and the second electrode plate, thereby relieving the problem that the first active layer and the second current collector overlap, in other words, relieving a problem of self-discharging of the electrode assembly caused by overlapping between the first electrode plate and the second electrode plate.

In some embodiments, one side or two opposite sides of at least a part of the insulation layer are combined with and fixed to the second film material.

In this way, one side or two sides of at least a part of the insulation layer are combined with and fixed to the second film material, so that the combination operation of the second electrode plate and the separator is very flexible.

In some embodiments, a second tab is disposed on the second current collector, and the second tab is located outside one end of the second active layer along the first direction. In the first direction, the insulation layer is located between the second active layer and the second tab.

In this way, the insulation layer can implement insulation between the first active layer and the second current collector, and can relieve a problem that an end of the first active layer along the first direction penetrates the second film material and overlaps the second current collector.

In some embodiments, a first tab is disposed on the first current collector, the first tab is disposed on one end of the first active layer along the first direction, and the second tab is disposed on the second current collector. The second tab is located on one end of the second active layer close to the first tab along the first direction, or the second tab is located on one end of the second active layer far away from the first tab along the first direction.

In this way, the insulation layer can be located at one end of the second current collector close to or far away from the first tab along the first direction, to implement insulation between the second current collector and the first active layer, and relieve a problem that the end of the first active layer penetrates the separator and overlaps the second current collector.

In some embodiments, one side of at least a part of the second film material is combined with and fixed to the first electrode plate or the second electrode plate; and/or
two opposite sides of at least a part of the second film material are respectively combined with and fixed to the first electrode plate and the second electrode plate.

In this way, the combination operation of the second film material on the electrode assembly is very flexible.

In some embodiments, the second film material is disposed on two opposite ends of the first film material along the first direction, and the second film material on each end of the first film material along the first direction is combined with and fixed to the first electrode plate and/or the second electrode plate.

In this way, the problem of self-discharging of the electrode assembly caused by overlapping between the first electrode plate and the second electrode plate due to failure of the separator in wrapping the electrode plate because of folding of the separator can be relieved, and an insulation effect between the separator and both the first electrode plate and the second electrode plate can be well maintained.

In some embodiments, the second film material is combined with the first electrode plate to form a first composite structure. First composite structures on ends of the first electrode plate in the first direction are spaced apart or are continuously disposed, or the first electrode plate forms two groups of first composite structures that are spaced apart along the first direction, one group of first composite structures are spaced apart, and the other group of first composite structures are continuously disposed.

By using the foregoing technical solution, the combination operation of the first electrode plate and the second film material is very flexible.

In some embodiments, the second film material is combined with the second electrode plate to form a second composite structure, and second composite structures are spaced apart or are continuously disposed.

By using the foregoing technical solution, the combination operation of the second electrode plate and the second film material is very flexible.

In some embodiments, the separator includes a substrate and a bonding layer disposed on two opposite sides of the substrate, and the separator is adhered to the first electrode plate and/or the second electrode plate through the bonding layer, to be combined with and fixed to the first electrode plate and/or the second electrode plate; and/or
the electrode assembly further includes a first adhesive layer disposed on the separator, and the separator is adhered to the first electrode plate and/or the second electrode plate through the first adhesive layer, to be combined with and fixed to the first electrode plate and/or the second electrode plate; and/or
the electrode assembly further includes a second adhesive layer disposed on the first electrode plate, and the first electrode plate is adhered to the separator through the second adhesive layer, to be combined with and fixed to the separator; and/or
the electrode assembly further includes a third adhesive layer disposed on the second electrode plate, and the second electrode plate is adhered to the separator through the third adhesive layer, to be combined with and fixed to the separator.

By using the foregoing technical solution, in a combination operation process, the separator achieves a combination and fixing effect in an adhering manner.

In some embodiments, the first electrode plate and the second electrode plate are stacked and wound, and the electrode assembly is in a flat shape or a cylindrical shape.

In this way, the bonding layer on the separator can provide a proper buffer between the first electrode plate and the second electrode plate, to relieve a problem that the first electrode plate and/or the second electrode plate is broken in a charging and discharging process of the battery cell.

According to a second aspect, an embodiment of the present application provides a battery, including the battery cell.

In the battery provided in this embodiment of the present application, by using the foregoing battery cell, only a part of the separator is used for performing combination operation, and other parts of the separator are not used for performing combination operation. In this way, a problem of poor overall air permeability of the separator can be relieved, helping to improve an ionic conducting capability of the separator, and further helping to improve charging and discharging performance of the battery cell, to improve kinetic performance of the battery cell.

According to a third aspect, an embodiment of the present application provides an electrical apparatus, including the battery cell or the battery.

The electrical apparatus provided in this embodiment of the present application uses the foregoing battery cell or battery, helping to improve charging and discharging performance of the battery cell, to improve kinetic performance of the battery cell, thereby improving reliability of the electrical apparatus.

According to a fourth aspect, an embodiment of the present application provides a combination apparatus, applied to a battery cell. The combination apparatus is configured to combine and fix a part of a separator to a first electrode plate and/or a second electrode plate.

The combination apparatus provided in this embodiment of the present application is configured to combine and fix the part of the separator to the first electrode plate and/or the second electrode plate, so that only a part of the separator is used for performing combination operation, and other parts of the separator are not used for performing combination operation. In this way, a problem of poor overall air permeability of the separator can be relieved, helping to improve an ionic conducting capability of the separator, and further helping to improve charging and discharging performance of the battery cell, to improve kinetic performance of the battery cell.

In some embodiments, the combination apparatus includes a combination mechanism configured to perform combination operation. There is one combination mechanism, or there are a plurality of combination mechanisms, and the plurality of combination mechanisms are configured to sequentially perform combination operation.

By using the foregoing technical solution, the quantity of combination mechanisms can be selected based on a required combination and fixing effect, so that the combination operation is very flexible.

In some embodiments, the combination mechanism includes a first combination roller and a second combination roller, the first combination roller includes a first rotating roller and a first convex part disposed on an outer peripheral side of the first rotating roller, the first convex part and the second combination roller are configured to cooperate to perform rolling combination operation, the first convex part and the second combination roller are spaced to form a rolling gap, and the first convex part and the first rotating roller define a first avoidance space communicating with the rolling gap.

In this way, a part of the separator can be not used for performing combination operation. In this way, the problem of poor overall air permeability of the separator can be relieved, helping to improve the ionic conducting capability of the separator, and further helping to improve the charging and discharging performance of the battery cell, to improve the kinetic performance of the battery cell.

In some embodiments, the second combination roller includes a second rotating roller and a second convex part disposed on an outer periphery of the second rotating roller, and the second convex part and the first convex part are disposed oppositely, and are spaced apart to form the rolling gap. The second convex part and the second rotating roller define a second avoidance space communicating with the rolling gap.

In this way, a part of the separator can be not used for performing combination operation.

In some embodiments, the first convex part is continuously disposed on the outer peripheral side of the first rotating roller along a peripheral direction; or first convex parts are spaced apart and disposed on the outer peripheral side of the first rotating roller along a peripheral direction; or the first rotating roller is provided with two groups of first convex parts that are spaced apart along a first direction, where one group of first convex parts are continuously disposed on the peripheral side of the first rotating roller along the peripheral direction, and the other group of first convex parts are spaced apart and disposed on the peripheral side of the first rotating roller along the peripheral direction.

In this way, the first composite structure formed through the combination operation can be disposed continuously or spaced apart, or the second composite structure formed through the combination operation can be disposed continuously or spaced apart, so that a combination effect can be very flexible.

In some embodiments, the second convex part is continuously disposed on the outer peripheral side of the second rotating roller along a peripheral direction; or second convex parts are spaced apart and disposed on the outer peripheral side of the second rotating roller along a peripheral direction; or the second rotating roller is provided with two groups of second convex parts that are spaced apart along the first direction, where one group of second convex parts are continuously disposed on the peripheral side of the second rotating roller along the peripheral direction, and the other group of second convex parts are spaced apart and disposed on the peripheral side of the second rotating roller along the peripheral direction.

In this way, the first composite structure formed through the combination operation can be disposed continuously or spaced apart, or the second composite structure formed through the combination operation can be disposed continuously or spaced apart, so that a combination effect can be very flexible.

According to a fifth aspect, an embodiment of the present application provides a processing device, including a combination apparatus.

The processing device provided in this embodiment of the present application uses the foregoing combination apparatus, helping to improve charging and discharging performance of a battery, to improve kinetic performance of the battery.

In some embodiments, the processing device further includes:
a winding apparatus, configured to wind the first electrode plate, the second electrode plate, and the separator to form the electrode assembly.

In this way, the electrode assembly can be obtained through winding.

In some embodiments, the processing device further includes a shaping apparatus, and the shaping apparatus is configured to shape the electrode assembly into a flat shape.

In this way, a flat-shaped electrode assembly can be obtained.

In some embodiments, the processing device further includes:
an assembling apparatus, configured to assemble the electrode assembly to form the battery cell; and
a stacking apparatus, configured to stack the battery cell to form a battery.
In this way, the battery can be obtained.

According to a sixth aspect, an embodiment of the present application provides a combination method, using the combination apparatus, and including:
driving the combination apparatus to combine and fix a part of a separator to a first electrode plate and/or a second electrode plate.

In the combination method provided in this embodiment of the present application, by using the foregoing combination apparatus, the combination operation is performed on only a part of the separator, so that other parts of the separator are not used for performing combination operation. In this way, a problem of poor overall air permeability of the separator can be relieved, helping to improve an ionic conducting capability of the separator, and further helping to improve charging and discharging performance of the battery cell, to improve kinetic performance of the battery cell.

In some embodiments, the driving the combination apparatus to combine and fix a part of a separator to a first electrode plate and/or a second electrode plate includes:

driving a first combination roller and/or a second combination roller to rotate, so that a first convex part on the first combination roller cooperates with the second combination roller to roll the separator and at least one of the first electrode plate and the second electrode plate.

In this way, the combination apparatus performs the rolling operation by using the first combination roller and the second combination roller in cooperation, so that the other parts of the separator are not used for performing combination operation.

In some embodiments, before the driving the combination apparatus to combine a part of a separator to a first electrode plate and/or a second electrode plate, the method further includes:
disposing a first adhesive layer on the separator, and/or disposing a second adhesive layer on the first electrode plate, and/or disposing a third adhesive layer on the second electrode plate.

In this way, the separator can achieve a secure combination and fixing effect.

The foregoing descriptions are merely an overview of the technical solutions of the present application. To understand the technical means of the present application more clearly, implementation can be performed according to content of the specification. Moreover, to make the foregoing and other objectives, features, and advantages of the present application more comprehensible, specific implementations of the present application are particularly described below.

### BRIEF DESCRIPTION OF THE DRAWINGS

To describe the technical solutions in embodiments of the present application more clearly, the following briefly introduces the accompanying drawings required for describing the embodiments or exemplary technologies. Apparently, the accompanying drawings in the following descriptions show merely some embodiments of the present application, and a person of ordinary skill in the art may still derive other accompanying drawings from these accompanying drawings without creative efforts.
FIG. 1 is a schematic diagram of a vehicle according to some embodiments of the present application;
FIG. 2 is a schematic exploded view of a battery according to some embodiments of the present application;
FIG. 3 is a front view of an electrode assembly of a battery cell according to some embodiments of the present application;
FIG. 4 is a top view of FIG. 3;
FIG. 5 is a schematic diagram of an electrode assembly of a battery cell according to some other embodiments of the present application;
FIG. 6 is a sectional view along A-A in FIG. 5;
FIG. 7 is a sectional view along B-B in FIG. 3;
FIG. 8 is a schematic diagram of a first separator, a first electrode plate, a second separator, and a second electrode plate of the electrode assembly shown in FIG. 3 after being stacked and before being wound;
FIG. 9 is a sectional view along C-C in FIG. 8;
FIG. 10 is a schematic diagram of the structure shown in FIG. 9 according to another embodiment;
FIG. 11 is a schematic diagram of the structure shown in FIG. 9 according to still another embodiment;
FIG. 12 is a schematic diagram of a part of a processing device according to some embodiments of the present application;
FIG. 13 is a schematic diagram of an electrode assembly obtained in FIG. 12;
FIG. 14 is a schematic diagram of processing an electrode assembly by a shaping apparatus of the processing device shown in FIG. 12;
FIG. 15 is a schematic diagram of an electrode assembly obtained in FIG. 14;
FIG. 16 is a schematic diagram of the structure shown in FIG. 9 according to yet another embodiment;
FIG. 17 is a schematic diagram of the structure shown in FIG. 9 according to yet another embodiment;
FIG. 18 is a schematic diagram of a first electrode plate and a separator of the electrode assembly shown in FIG. 3 after being stacked and before being wound;
FIG. 19 is a schematic diagram of the structure shown in FIG. 18 according to another embodiment;
FIG. 20 is a schematic diagram of the structure shown in FIG. 18 according to still another embodiment;
FIG. 21 is a schematic diagram of a second electrode plate and a separator of the electrode assembly shown in FIG. 3 after being stacked and before being wound;
FIG. 22 is a schematic diagram of the structure shown in FIG. 3 according to another embodiment;
FIG. 23 is a schematic diagram of the combination apparatus according to some embodiments of the present application;
FIG. 24 is a schematic diagram of a combination mechanism of a combination apparatus according to some embodiments of the present application;
FIG. 25 is a sectional view of a combination mechanism of a combination apparatus according to some embodiments of the present application;
FIG. 26 is a sectional view of a combination mechanism of a combination apparatus according to some other embodiments of the present application;
FIG. 27 is a schematic diagram of a processing device according to some embodiments of the present application; and
FIG. 28 is a flowchart of a combination method according to some embodiments of the present application.

Reference numerals in the drawings:
1000-Vehicle; 100-battery; 200-controller; 300-motor; 10-battery cell; 20-box; 201-accommodating space; 21-first part; 22-second part; 11-electrode assembly; 111-first electrode plate; 1111-first current collector; 11111-first tab; 1112-first active layer; 112-second electrode plate; 1121-second current collector; 11211-second tab; 1122-second active layer; 1123-insulation layer; 113-separator; 113a-first separator; 113b-second separator; 1131-first film material; 1132-second film material; 1133-substrate; 1134-bonding layer; 12-first adhesive layer; a-first composite structure; b-second composite structure; m-straight part; n-curved part; 2000-processing device; 2001-combination gap; 2002-first avoidance space; 2003-second avoidance space; 2100-combination apparatus; 2110-combination mechanism; 2111-first combination roller; 21111-first rotating roller; 21112-first convex part; 2112-second combination roller; 21121-second rotating roller; 21122-second convex part; 2200-winding apparatus; 2300-shaping apparatus; 2400-assembling apparatus; 2500-stacking apparatus; Z-first direction; and X-second direction.

### DETAILED DESCRIPTION

The following describes embodiments of the present application in detail. Examples of the embodiments are shown in the accompanying drawings, and same or similar reference signs in all the accompanying drawings indicate same or similar components or components having same or similar functions. The embodiments described below with reference to the accompanying drawings are exemplary, and are intended to explain the present application and cannot be construed as a limitation to the present application.

Understandably, in the description of the present application, a direction or positional relationship indicated by the terms such as "length", "width", "up", "down", "front", "back", "left", "right", "vertical", "horizontal", "top", "bottom", "in", and "out" is a direction or positional relationship based on the illustration in the drawings, and is merely intended for ease or brevity of description of the present application, but does not necessarily mean or imply that the indicated device or component is located in the specified direction or constructed or operated in the specified direction. Therefore, such terms are not to be understood as a limitation on the present application.

In addition, the terms "first" and "second" are used merely for the purpose of description, and shall not be construed as indicating or implying relative importance or implying a quantity of indicated technical features. Therefore, a feature defined by "first" or "second" may explicitly or implicitly include one or more features.

In the descriptions of the present application, unless otherwise expressly specified, "a plurality of" means at least two, and "at least two" includes two. Correspondingly, "a plurality of groups" means at least two groups, and includes two groups.

In the descriptions of the present application, unless otherwise expressly specified and defined, the technical terms such as "mounting", "concatenation", "connection", and "fixing" need to be understood in a broad sense, for example, understood as a fixed connection or a detachable connection or integrally formed; or understood as a mechanical connection or an electrical connection; understood as a direct connection, or an indirect connection implemented through an intermediary; or understood as internal communication between two components or interaction between two components. A person of ordinary skill in the art may understand the specific meanings of the foregoing terms in the present application according to specific situations.

The term "and/or" in the descriptions of the present application describes only an association relationship for describing associated objects and represents that three relationships may exist. For example, A and/or B may represent the following three cases: A exists, both A and B exist, and B exists. In addition, the character "/" in the present application generally indicates an "or" relationship between the associated objects.

Although the present application has been described with reference to the preferred embodiments, various improvements can be made thereto and components thereof can be replaced with equivalents without departing from the scope of the present application. Especially, as long as there is no structural conflict, the various technical features mentioned in each embodiment can be combined in any way. The present application is not limited to the particular embodiments disclosed herein, but includes all technical solutions that fall within the scope of the claims.

In the related art, a battery cell may usually include a housing and an electrode assembly disposed inside the housing. The electrode assembly is a component that undergoes electrochemical reactions in the battery cell. The electrode assembly mainly includes a positive electrode plate and a negative electrode plate that are stacked or are wound and wound, and a separator is arranged between the positive electrode plate and the negative electrode plate. The separator is an isolating structure, has isolating performance, and is used for implementing isolation between the positive electrode plate and the negative electrode plate, to relieve a problem of self-discharging of the electrode assembly caused by overlapping between the positive electrode plate and the negative electrode plate.

In some cases, in a processing process of the battery cell, large pressure needs to be provided for the positive electrode plate, the negative electrode plate, and the separator by using manners including but not limited to rolling, to perform a combination operation, so that the entire separator is combined with and fixed to the positive electrode plate and the negative electrode plate. In this way, positions of the separator on the positive electrode plate and the negative electrode plate can be maintained, so that an insulation effect of the separator on the positive electrode plate and the negative electrode plate can be maintained.

However, in a process of providing large pressure to the positive electrode plate, the negative electrode plate, and the separator by using manners including but not limited to rolling, so that the entire separator is combined with and fixed to the positive electrode plate and the negative electrode plate, the entire separator is subject to the large pressure, and consequently, air permeability of the separator becomes worse, and an ionic conducting capability of the separator also becomes weaker. In this way, ions in the electrolyte hardly pass through the separator, and therefore, hardly perform deintercalation between the positive electrode plate and negative electrode plate. Therefore, under the combination operation, air permeability of the separator is affected, further affecting charging and discharging performance of the battery cell, and affecting kinetic performance of the battery cell.

Based on the foregoing consideration, the embodiments of the present application provide a battery cell, a battery, an electrical apparatus, a combination apparatus and method, and a processing device, so that a part of the separator is combined with and fixed to a first electrode plate; or a part of the separator is combined with and fixed to a second electrode plate; or a part of the separator is combined with and fixed to a first electrode plate and a second electrode plate. In this way, only a part of the separator is used for performing combination operation, and other parts of the separator are not used for performing combination operation. In this way, a problem of poor overall air permeability of the separator can be relieved, helping to improve an ionic conducting capability of the separator, and further helping to improve the charging and discharging performance of the battery cell, to improve the kinetic performance of the battery cell.

It should be noted that the combination apparatus and method refer to a combination apparatus and a combination method.

In some embodiments, the battery cell and the battery in the embodiments of the present application may be used in an electrical apparatus using a battery cell or a battery as a power supply.

In the embodiments of the present application, the electrical apparatus may be, but is not limited to, a mobile phone, a tablet, a notebook computer, an electric toy, an electric tool, a battery vehicle, a vehicle, a ship, a spacecraft, and the like. The electric toy may include a fixed or mobile electric toy, for example, a game console, an electric car toy, an electric ship toy, or an electric airplane toy. The spacecraft may include an airplane, a rocket, a space shuttle, a spacecraft, and the like. Classifying according to power sources, the vehicle may be an oil-fueled vehicle, a gas-powered vehicle, or a new energy vehicle. The new energy vehicle may be a battery electric vehicle, a hybrid electric vehicle, an extended-range electric vehicle, or the like. Classifying according to driving manners, the vehicle may be a front-wheel-driving vehicle, a rear-wheel-driving vehicle, or a four-wheel-driving vehicle.

In some other embodiments, the battery cell and the battery in the embodiments of the present application may alternatively be used in an energy storage apparatus. The energy storage apparatus may be an energy storage container, an energy storage cabinet, or the like.

The battery in the embodiments of the present application may be a single physical module including one or more battery cells to provide a higher voltage and a higher capacity. When there are a plurality of battery cells, the plurality of battery cells can be connected in series, or in parallel, or in series-parallel through a bus component. Being connected in series-parallel means that there are both series and parallel connections between the plurality of battery cells.

In some embodiments, the battery may be a battery module. When there are a plurality of battery cells, the plurality of battery cells are arranged and fixed to form a battery module. In an example, the plurality of battery cells may be fixed by using a cable tie or the like to form the battery module. In an example, the plurality of battery cells may alternatively be fixed by using an end plate, a side plate, or the like to form the battery module.

In some other embodiments, the battery may be a battery pack. The battery pack may include a box and a battery cell. In an example, the battery cell may be directly accommodated in the box. In an example, the battery cell may first form a battery module, and then the battery module is accommodated in the box.

The battery cell in the embodiments of the present application means a minimum unit for storing or outputting electric energy. The battery cell may be a secondary battery or a primary battery. The battery cell may be but is not limited to a metal battery, a lithium-sulfur battery, a sodium-ion battery, or a magnesium-ion battery. The battery cell may be cylindrical, flat, cuboid, or in other shapes.

For convenience of description, an example in which the electrical apparatus is a vehicle is used in the embodiments of the present application for description.

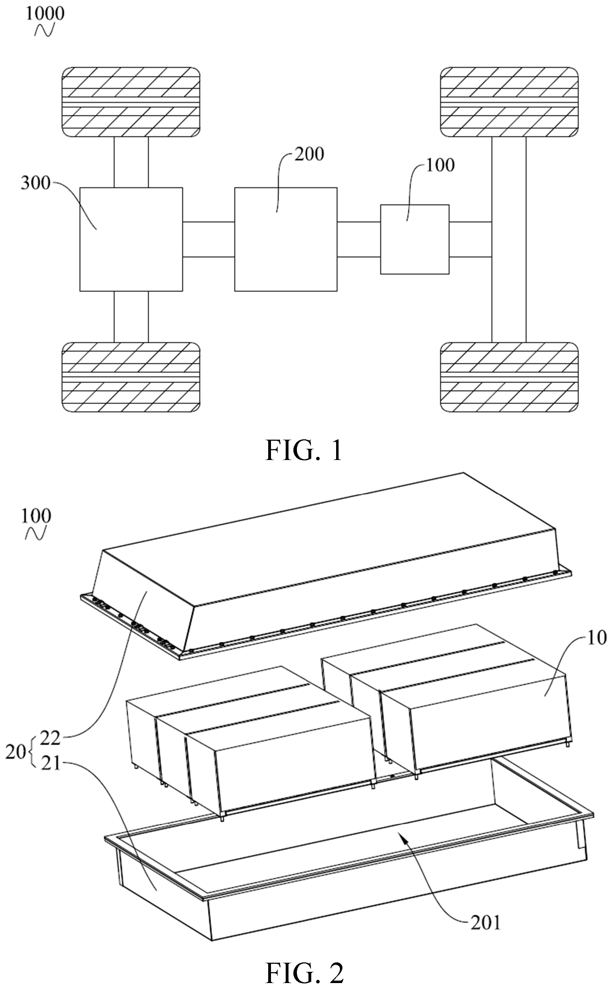

In some embodiments, referring to FIG. 1, FIG. 1 is a schematic diagram of a vehicle 1000 according to some embodiments of the present application. The foregoing battery 100 is disposed inside the vehicle 1000, and the battery 100 may be disposed at the bottom, head, or tail of the vehicle 1000. The battery 100 may be configured to supply power to the vehicle 1000. For example, the battery 100 may be used as a power supply for operating the vehicle 1000. The vehicle 1000 may further include a controller 200 and a motor 300. The controller 200 is configured to control the battery 100 to supply power to the motor 300, for example, to meet working power requirements during starting, navigation, and traveling of the vehicle 1000.

In some embodiments, the battery 100 may serve not only as a power supply for operating the vehicle 1000, but also as a power supply for driving the vehicle 1000, to alternatively or partially replace fuel or natural gas to provide driving power for the vehicle 1000.

In some embodiments, referring to FIG. 2, FIG. 2 is an exploded view of a battery 100 according to some embodiments of the present application. The battery 100 includes a box 20 and a plurality of battery cells 10. The box 20 is a structure having an accommodating space 201 inside, and the box 20 may use various structures. In some embodiments, the box 20 may include a first part 21 and a second part 22, and the first part 21 and the second part 22 cover each other, and jointly define the accommodating space 201.

Referring to FIG. 2, the first part 21 may be a hollow structure having an opening at one end, the second part 22 is a plate-shaped structure, and the second part 22 covers a side of the first part 21 with the opening, so that the first part 21 and the second part 22 jointly define the accommodating space 201. Alternatively, the first part 21 and the second part 22 each may be a hollow structure having an opening at one end, and a side of the first part 21 with the opening covers a side of the second part 22 with the opening, so that the first part 21 and the second part 22 jointly define the accommodating space 201.

The box 20 formed by the first part 21 and the second part 22 may be in various shapes, such as a cylinder and a cuboid.

In some embodiments, referring to FIG. 2, the plurality of battery cells 10 may be connected in series or in parallel or in series-parallel to form an integrity, and then the integrity formed by the plurality of battery cells 10 is directly accommodated in the accommodating space 201 of the box 20. In some other embodiments, the plurality of battery cells 10 may alternatively be first connected in series or in parallel or in series-parallel to be arranged and fixedly form a plurality of battery modules, and the plurality of battery modules are then connected in series or in parallel or in series-parallel to form an integrity, and are accommodated in the accommodating space 201 of the box 20.

In some embodiments, the box 20 of the battery 100 may be used as a part of a chassis structure of the vehicle 1000. For example, a part of the box 20 may serve as at least a part of the chassis of the vehicle 1000, or a part of the box 20 may serve as at least a part of the cross beam and longitudinal beam of the vehicle 1000.

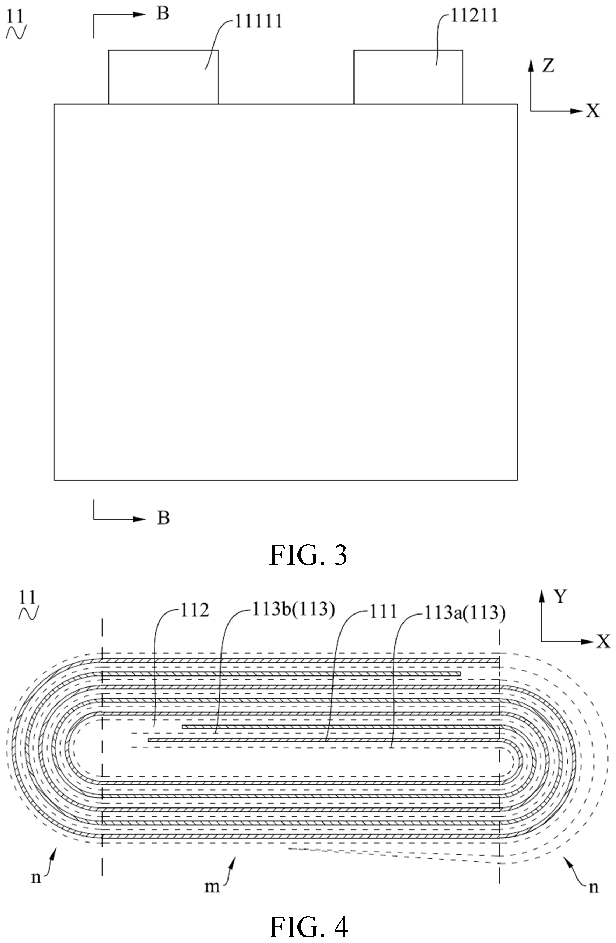

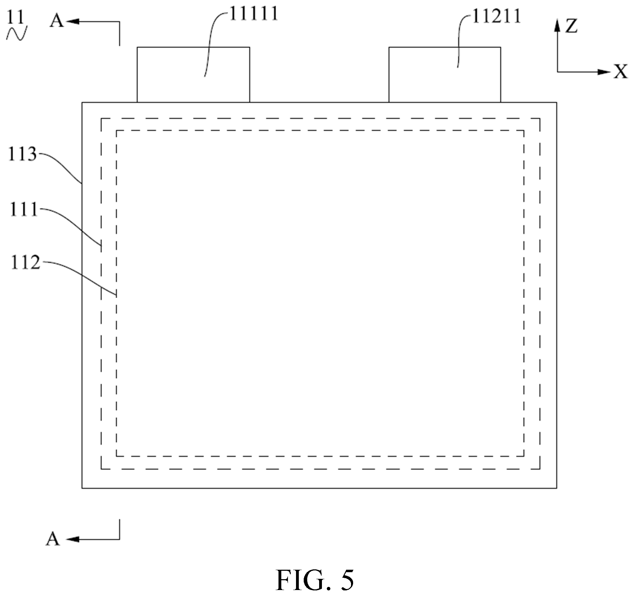

In some embodiments, refer to FIG. 3 to FIG. 5 together with reference to other accompanying drawings. FIG. 3 is a front view of an electrode assembly 11 of a battery cell 10 according to some embodiments of the present application, and FIG. 4 is a top view of an electrode assembly 11 of a battery cell 10 according to some embodiments of the present application. FIG. 4 is specifically a schematic diagram of the electrode assembly 11 from a viewing angle along a first direction Z described below. A first composite structure and a second composite structure are not shown in FIG. 4. In FIG. 3 and FIG. 4, the electrode assembly 11 is mainly formed by a positive electrode plate and a negative electrode plate that are stacked and wound, and is a winding body described below. FIG. 5 is a schematic diagram of an electrode assembly 11 of a battery cell 10 according to some other embodiments of the present application. In FIG. 5, a positive electrode plate and a negative electrode plate of the electrode assembly 11 are shown by using dashed lines. In FIG. 5, the electrode assembly 11 is mainly formed by a positive electrode plate and a negative electrode plate that are stacked, and is a winding body described below.

The battery cell 10 may include the electrode assembly 11 and a housing.

The electrode assembly 11 is a component that undergoes electrochemical reactions in the battery cell 10. The electrode assembly 11 mainly includes a positive electrode plate and a negative electrode plate that are wound or stacked, and a separator 113 is arranged between the positive electrode plate and the negative electrode plate. Parts of the positive electrode plate and the negative electrode plate that have active materials constitute a body part of the electrode assembly 11, and parts of the positive electrode plate and the negative electrode plate that have no active materials each constitute a tab. A tab of the positive electrode plate is a positive electrode tab, and a tab of the negative electrode plate is a negative electrode tab. The positive electrode tab and the negative electrode tab may be located at one end of the body part together or at two opposite ends of the body part separately. The separator 113 is an isolating structure, has isolating performance, and is used for implementing isolation between the positive electrode plate and the negative electrode plate, to relieve a problem of self-discharging of the electrode assembly 11 caused by overlapping between the positive electrode plate and the negative electrode plate.

In the battery cell 10, a shape of the electrode assembly 11 may be cylindrical, square, flat, or the like.

There may be one or more electrode assemblies 11 in the battery cell 10.

In some cases, the electrode assembly 11 may alternatively be referred to as a bare battery core, a winding body, a stacked body, or the like.

In some embodiments, the battery cell 10 may further include an electrolyte, and the electrolyte functions to conduct ions between the positive electrode plate and the negative electrode plate. In a process of ion movement between the positive electrode plate and the negative electrode plate, ions need to pass through the separator 113 between the positive electrode plate and the negative electrode plate. The electrolyte in the embodiments of the present application may be liquid, gelled, or solid.

In some embodiments, the housing may include a shell and an end cover. The shell and the end cover are components that are configured to jointly define an internal environment of the battery cell 10. The internal environment defined by the shell and the end cover is configured to accommodate the electrode assembly 11 and the electrolyte. The shell and the end cover may be independent components. Specifically, the shell has an opening, and the end cover covers the opening of the shell, to jointly define the internal environment of the battery cell 10 with the shell, and isolate the internal environment of the battery cell 10 from an external environment. Alternatively, the end cover and the shell may be of an integrated structure. Specifically, the end cover and the shell may form a shared connection surface before the electrode assembly 11 is disposed inside the shell, and then after the electrode assembly 11 is disposed inside the shell, the end cover covers the shell when the electrode assembly 11 needs to be enclosed.

There may be one end cover. Alternatively, there may be two end covers, and the two end covers are respectively disposed on opposite ends of the shell.

A shape of the shell may be cylindrical, square, or the like, and specifically, may be determined based on a specific shape and size of the electrode assembly 11. In addition, the shell and the end cover may also be made of various materials, such as copper, iron, aluminum, stainless steel, aluminum alloy, and plastics.

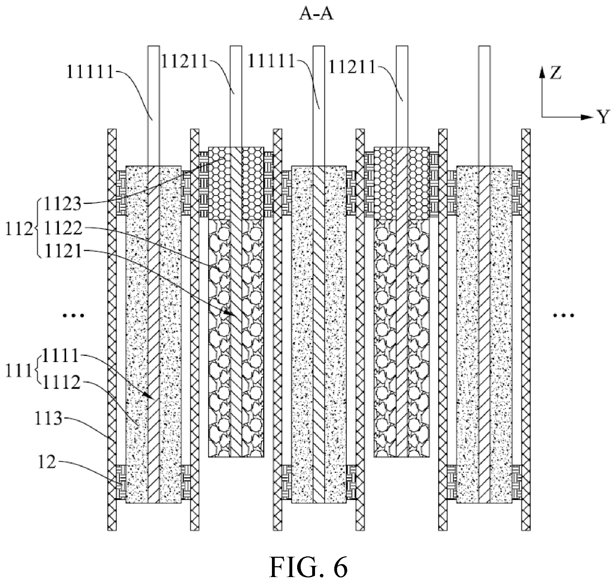

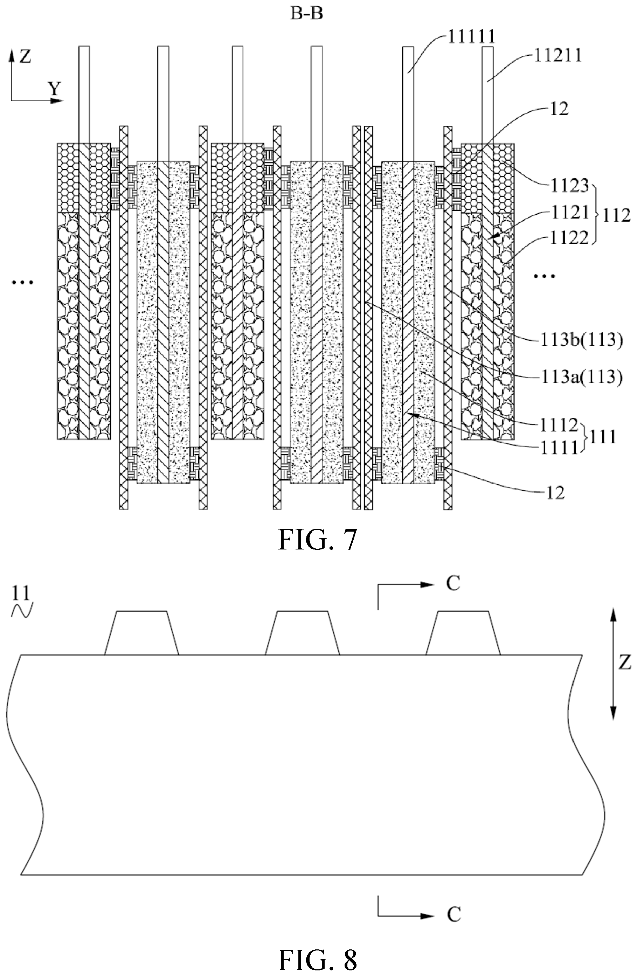

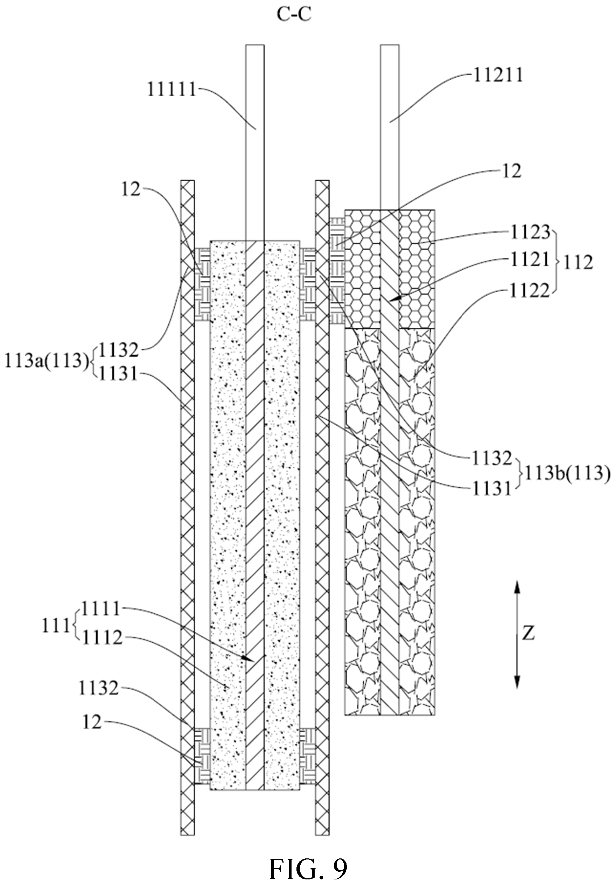

Refer to FIG. 3 to FIG. 9 together with reference to other accompanying drawings. FIG. 6 is a sectional view along A-A in FIG. 5, and partial structures on two sides are omitted by using ellipses in FIG. 6. FIG. 7 is a sectional view along B-B in FIG. 3, and partial structures on two sides are omitted by using ellipses in FIG. 7. FIG. 8 is a schematic diagram of a first separator 113a, a first electrode plate 111, a second separator 113b, and a second electrode plate 112 of the electrode assembly 11 of the battery 100 cell provided in FIG. 3 after being stacked and before being wound. FIG. 9 is a schematic diagram along C-C in FIG. 8. The battery 100 cell provided in the embodiments of the present application includes an electrode assembly 11, and the electrode assembly 11 includes a first electrode plate 111, a second electrode plate 112, and a separator 113. In some possible designs, referring to FIG. 5 and FIG. 6 together, the first electrode plate 111 and the second electrode plate 112 are alternately stacked; or in some other possible designs, referring to FIG. 3, FIG. 4, and FIG. 7 to FIG. 9 together, the first electrode plate 111 and the second electrode plate 112 are alternately stacked and wound. At least a part of the separator 113 is disposed between the first electrode plate 111 and the second electrode plate 112. In addition, a part of the separator 113 is combined with and fixed to the first electrode plate 111 and/or the second electrode plate 112.

The first electrode plate 111 is a positive electrode plate, and the second electrode plate 112 is a negative electrode plate. Alternatively, the first electrode plate 111 is a negative electrode plate, and the second electrode plate 112 is a positive electrode plate.

It should be noted that, that the electrode assembly 11 includes a first electrode plate 111, a second electrode plate 112, and a separator 113 means that the electrode assembly 11 includes at least one first electrode plate 111, at least one second electrode plate 112, and at least one separator 113.

When there is one first electrode plate 111 and there is one second electrode plate 112, that the first electrode plate 111 and the second electrode plate 112 are alternately stacked means that the first electrode plate 111 and the second electrode plate 112 are disposed in a sequentially stacked manner. In an example, in FIG. 8 and FIG. 9, there is one first electrode plate 111 and there is one second electrode plate 112. When there are a plurality of first electrode plates 111 and a plurality of second electrode plates 112, that the first electrode plates 111 and the second electrode plates 112 are alternately stacked means that a stacking sequence of the first electrode plate 111 and the second electrode plate 112 is the first electrode plate 111, the second electrode plate 112, the first electrode plate 111, ..., and so on. In an example, in FIG. 5 and FIG. 6, there are a plurality of first electrode plates 111 and a plurality of second electrode plates 112.

For ease of description, herein, an electrode assembly 11 formed by the first electrode plate 111 and the second electrode plate 112 that are alternately stacked is named a stacked body, and an electrode assembly 11 formed by the first electrode plate 111 and the second electrode plate 112 that are stacked and wound is named a winding body.

When the electrode assembly 11 is the stacked body, one separator 113 may be provided, and the separator 113 is bent in a process in which the first electrode plate 111 and the second electrode plate 112 are alternately stacked, so that at least a part of the separator 113 is stacked between the first electrode plate 111 and the second electrode plate 112. Alternatively, a plurality of separators 113 may alternatively be provided, and at least one separator 113 is stacked between the first electrode plate 111 and the second electrode plate 112.

When the electrode assembly 11 is the winding body, a quantity of separators 113 is generally the same as a quantity of electrode plates (including the first electrode plate 111 and the second electrode plate 112), and the separators 113 and the electrode plates are stacked and wound in a sequence of the separator 113, the electrode plate, and the separator 113. An example in which a quantity of the first electrode plates 111 and a quantity of the second electrode plates 112 are both one is used. As shown in FIG. 3, FIG. 4, and FIG. 7 to FIG. 9, there are two separators 113. The two separators 113 are respectively a first separator 113a and a second separator 113b. The first separator 113a, the first electrode plate 111, the second separator 113b, and the second electrode plate 112 are alternately stacked and wound.

Based on this, the separator 113 is disposed between the first electrode plate 111 and the second electrode plate 112, thereby isolating the first electrode plate 111 and the second electrode plate 112, and relieving a problem of self-discharging caused by overlapping between the first electrode plate 111 and the second electrode plate 112.

In some possible designs, the separator 113 is disposed only between the first electrode plate 111 and the second electrode plate 112, to implement insulation between the first electrode plate 111 and the second electrode plate 112, and relieve the problem of self-discharging caused by overlapping between the first electrode plate 111 and the second electrode plate 112. Alternatively, in some other possible designs, a part of the separator 113 is disposed between the first electrode plate 111 and the second electrode plate 112, and the other part of the separator 113 may be disposed on an outermost side of an integral structure formed by the first electrode plate 111 and the second electrode plate 112, so that the separator 113 is disposed on an outer peripheral side of the electrode assembly 11, thereby relieving a problem of overlapping and conduction between the electrode assembly 11 and an external structure. In an example, the electrode assembly 11 is the stacked body, and the separator 113 is disposed on two opposite sides of the electrode assembly 11 along a direction in which the first electrode plate 111 and the second electrode plate 112 are stacked. In another example, as shown in FIG. 4, the electrode assembly 11 is the winding body, and after being wound, the electrode assembly 11 is provided with the separator 113 ending up.

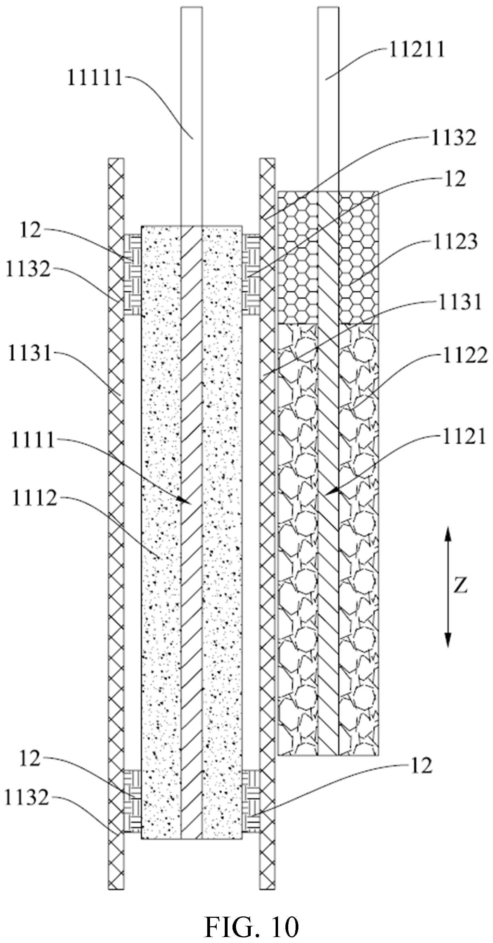

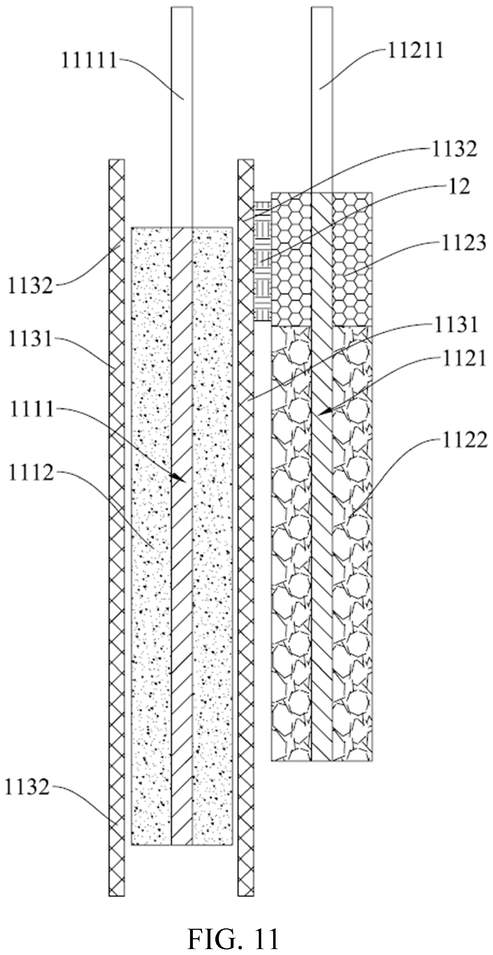

That a part of the separator 113 is combined with and fixed to the first electrode plate 111 and/or the second electrode plate 112 means that only a part of the separator 113 is used for performing combination operation, and other parts of the separator 113 are not used for performing combination operation. Referring to FIG. 9 to FIG. 11 together, FIG. 10 is a schematic diagram of the structure shown in FIG. 9 according to another embodiment, and FIG. 11 is a schematic diagram of the structure shown in FIG. 9 according to still another embodiment. It may be understood that, in some possible designs, as shown in FIG. 10, only a part of the separator 113 is combined with and fixed to the first electrode plate 111, but is not combined with and fixed to the second electrode plate 112. Alternatively, in some other possible designs, as shown in FIG. 10, only a part of the separator 113 is combined with and fixed to the second electrode plate 112, but is not combined with and fixed to the first electrode plate 111. Alternatively, in still some other possible designs, as shown in FIG. 9, a part of the separator 113 is combined with and fixed to the first electrode plate 111 and the second electrode plate 112.

That a part of the separator 113 is combined with and fixed to the first electrode plate 111 and the second electrode plate 112 means that a part of the separator 113 is combined with and fixed to the first electrode plate 111 and a part of the separator 113 is combined with and fixed to the second electrode plate 112. In addition, other parts of the separator 113 are not combined with and fixed to the first electrode plate 111 and are not combined with and fixed to the second electrode plate 112. In an example, as shown in FIG. 9, a part of the first separator 113a is combined with and fixed to the first electrode plate 111, and a part of the second separator 113b is combined with and fixed to the first electrode plate 111 and the second electrode plate 112.

In the battery 100 cell provided in the embodiments of the present application, the part of the separator 113 is combined with and fixed to the first electrode plate 111; or the part of the separator 113 is combined with and fixed to the second electrode plate 112; or the part of the separator 113 is combined with and fixed to the first electrode plate 111 and the second electrode plate 112. In this way, only a part of the separator 113 is used for performing combination operation, and other parts of the separator 113 are not used for performing combination operation. In this way, the problem of poor overall air permeability of the separator 113 can be relieved, helping to improve the ionic conducting capability of the separator 113, and further helping to improve the charging and discharging performance of the battery 100 cell, to improve the kinetic performance of the battery 100 cell.

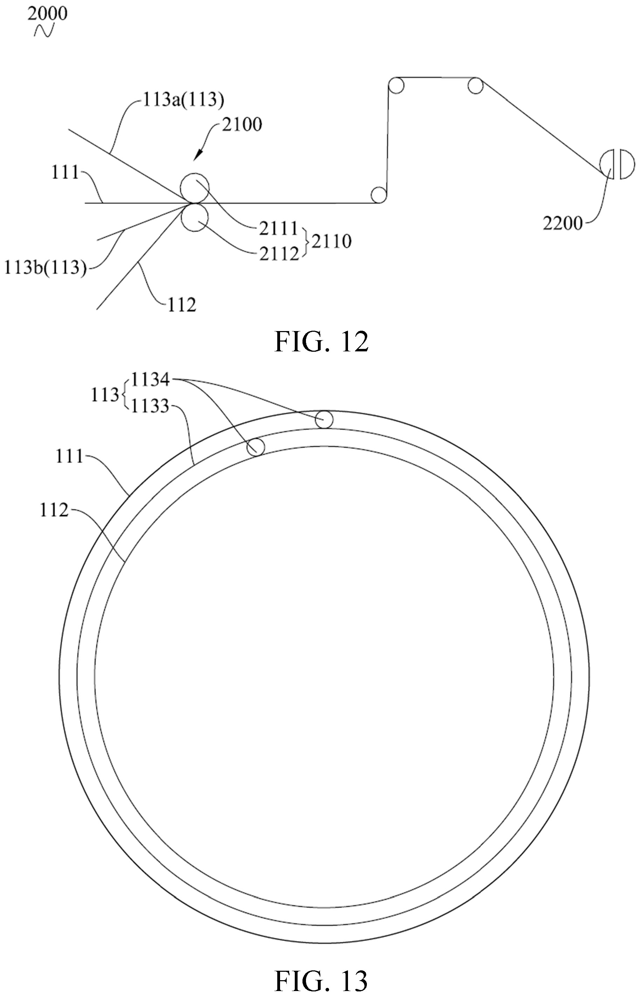

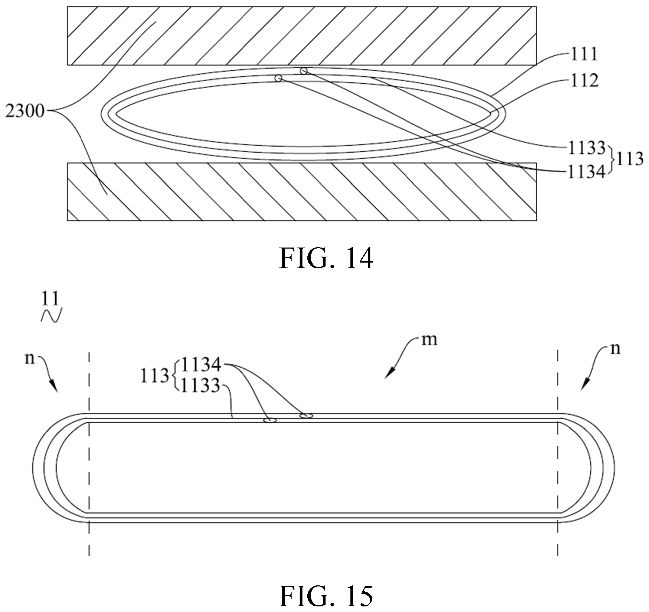

Refer to FIG. 12 to FIG. 15 together with reference to other accompanying drawings. FIG. 12 is a schematic diagram of a part of a processing device 2000 according to some embodiments of the present application. FIG. 13 is an electrode assembly 11 obtained in FIG. 12. FIG. 14 is a schematic diagram of shaping, by a shaping apparatus 2300 of a processing device 2000, an electrode assembly 11 obtained in FIG. 13 according to some embodiments of the present application. FIG. 15 is an electrode assembly 11 obtained in FIG. 14. In FIG. 13 to FIG. 15, the electrode assembly 11 only gives brief illustration, in other words, only briefly illustrates a structure of the separator 113.

In addition, it should be noted that, refer to FIG. 13 to FIG. 15 together with reference to other accompanying drawings. The separator 113 generally includes a substrate 1133 and a bonding layer 1134, and the bonding layer 1134 is disposed on two opposite sides of the substrate 1133. The bonding layer 1134 has adhesion performance, so that the separator 113 can perform adhesion operation.

For an electrode assembly 11 which is a winding body, as shown in FIG. 12, a first electrode plate 111, a separator 113, and a second electrode plate 112 generally are first stacked and undergo a combination operation, and then are wound to form the electrode assembly 11.

In some related technologies, in a process of the combination operation, the separator 113 may be under large pressure, so that the bonding layer 1134 is pressed and deformed, and the structure is changed to lose the adhesion capability. However, in the battery 100 cell provided in the embodiments of the present application, the combination operation is performed on only a part of the separator 113, and the combination operation is not performed on the other part, so that the adhesion capability of the bonding layer 1134 on the other part of the separator 113 can be retained. In this way, after the first electrode plate 111, the separator 113, and the second electrode plate 112 are stacked and wound, the separator 113 may be adhered to the first electrode plate 111 and the second electrode plate 112 through the adhesive layer 1134. In this way, integrity of the electrode assembly 11 formed through winding is improved, and a problem of separation of the electrode assembly 11 formed through winding is relieved, thereby improving quality of the battery 100 cell.

It should be further noted that, the bonding layer 1134 has a particular thickness, so that the entire separator 113 has a corresponding particular thickness.

In some other related technologies, after the entire separator 113 is combined with and fixed to the first electrode plate 111 and the second electrode plate 112, the entire separator 113 is under large pressure, so that the bonding layer 1134 is flattened and deformed, thereby making the thickness of the entire separator 113 very small. Based on this, after the first electrode plate 111, the separator 113, and the second electrode plate 112 are stacked and wound, because the thickness of the entire separator 113 is very small, a distance between the first electrode plate 111 and the second electrode plate 112 is correspondingly small. In a process of charging and discharging of the battery 100 cell, the first electrode plate 111 and the second electrode plate 112 expand, so that the first electrode plate 111 and the second electrode plate 112 that are located on an outer side of the electrode assembly 11 are easily broken, and further causing safety problems such as lithium plating and overlapping between the first electrode plate 111 and the second electrode plate 112. However, in the battery 100 cell provided in the embodiments of the present application, the combination operation is performed on only a part of the separator 113, and the combination operation is not performed on the other part, so that the bonding layer 1134 on the part of the separator 113 on which the combination operation is not performed is not flattened and deformed. The part of the separator 113 on which the combination operation is not performed has a large thickness, and can provide a large buffer space for expansion of the first electrode plate 111 and the second electrode plate 112. In this way, after the first electrode plate 111, the separator 113, and the second electrode plate 112 are stacked and wound, there is a large distance between the first electrode plate 111 and the second electrode plate 112 on two opposite sides of the part of the separator 113 on which the combination operation is not performed. In the process of charging and discharging of the battery 100 cell, the first electrode plate 111 and the second electrode plate 112 may expand, and compress the separator 113 on which the combination operation is not performed. In other words, a particular buffer is provided by using the separator 113 on which the combination operation is not performed, to relieve the problem of expansion and cracking of the first electrode plate 111 and the second electrode plate 112 in the process of charging and discharging. It may be understood that, the combination operation is performed on only a part of the separator 113, so that the bonding layer 1134 of the separator 113 has a capability of providing a buffer gap for charging and discharging of the electrode assembly 11.

Some electrode assemblies 11 which are winding bodies are shown in FIG. 4 and FIG. 12 to FIG. 15 with reference to other accompanying drawings. The electrode assembly 11 is divided into a straight part m and a curved part n by using dashed lines in both FIG. 4 and FIG. 15. After the first electrode plate 111 and the second electrode plate 112 are stacked and wound, a shaping operation further needs to be performed by using the shaping apparatus 2300, to obtain the electrode assembly 11. The electrode assembly 11 is flat-shaped, and includes one straight part m and two curved parts n. The first electrode plate 111, the second electrode plate 112, and the separator 113 of the straight part m are all disposed in a straight and extending manner, the first electrode plate 111, the second electrode plate 112, and the separator 113 of the curved part n are all disposed in a bent and extending manner, and the two curved parts n are respectively disposed at two opposite ends of the straight part m along a second direction X. In still some other related technologies, after the entire separator 113 is combined with and fixed to the first electrode plate 111 and the second electrode plate 112, the entire separator 113 is under large pressure, so that the bonding layer 1134 is flattened and deformed, thereby making the thickness of the entire separator 113 very small. Based on this, a distance between the first electrode plate 111 and the second electrode plate 112 is very small. In a process of charging and discharging of the battery 100 cell, the first electrode plate 111 and the second electrode plate 112 expand, so that the first electrode plate 111 and the second electrode plate 112 that are located on the curved part n are easily broken in the expansion process, and further causing safety problems such as lithium plating and overlapping between the first electrode plate 111 and the second electrode plate 112. However, in the battery 100 cell provided in the embodiments of the present application, the combination operation is performed on only a part of the separator 113, and the combination operation is not performed on the other part, so that the bonding layer 1134 on the part of the separator 113 on which the combination operation is not performed is not flattened and deformed, and the part of the separator 113 on which the combination operation is not performed has a large thickness. In this way, in the shaping process, the straight part m of the electrode assembly 11 undergoes large shaping pressure, so that the bonding layer 1134 of the separator 113 located in the straight part m can fill the curved part n as much as possible, and a large gap can be formed between the first electrode plate 111 and the second electrode plate 112 in the curved part n. In this way, an expansion space can be provided for the first electrode plate 111 and the second electrode plate 112 in the curved part n, to relieve the problem of expansion and cracking of the first electrode plate 111 and the second electrode plate 112 in the charging and discharging process. It may be understood that, the combination operation is performed on only a part of the separator 113, so that the bonding layer 1134 of the separator 113 has a capability of providing a buffer gap for charging and discharging of the electrode assembly 11.

The second direction X is parallel to the X axis shown in FIG. 3 and FIG. 4, the first direction Z described below is parallel to the Z axis, and the Y axis is further shown in FIG. 3 and FIG. 4. The X axis is perpendicular to the Z axis, the X axis is perpendicular to the Y axis, and the Y axis is perpendicular to the Z axis. In other words, the first direction Z is perpendicular to the second direction X.

In some embodiments, refer to FIG. 5 to FIG. 11 together with reference to other accompanying drawings. The first electrode plate 111 includes a first current collector 1111 and a first active layer 1112, and the first active layer 1112 is disposed on the first current collector 1111. The second electrode plate 112 includes a second current collector 1121 and a second active layer 1122, and the second active layer 1122 is disposed on the second current collector 1121. The separator 113 includes a first film material 1131 and a second film material 1132, and the second film material 1132 is disposed on an end side of the first film material 1131 along the first direction Z. The first film material 1131 is disposed opposite to the first active layer 1112, and the first film material 1131 is disposed opposite to the second active layer 1122. The second film material 1132 is located outside only an end side of the first active layer 1112 along the first direction Z. Alternatively, as shown in FIG. 5 to FIG. 9, the second film material 1132 is located outside only an end side of the second active layer 1122 along the first direction Z. Alternatively, the second film material 1132 is located outside an end side of the first active layer 1112 along the first direction Z, and is also located outside an end side of the second active layer 1122 along the first direction Z. As shown in FIG. 10, at least a part of the second film material 1132 is combined with and fixed to the first electrode plate 111. Alternatively, as shown in FIG. 11, at least a part of the second film material 1132 is combined with and fixed to the second electrode plate 112. Alternatively, as shown in FIG. 9, at least a part of the second film material 1132 is combined with and fixed to the first electrode plate 111 and the second electrode plate 112. The first direction Z is parallel to the first electrode plate 111 and the second electrode plate 112.

The first active layer 1112 refers to a structural layer of the first electrode plate 111 that is formed by an active material, and is configured to deintercalate ions or intercalate ions in the process of charging and discharging of the battery 100 cell. The first active layer 1112 is disposed on two opposite sides of the first current collector 1111.

The first current collector 1111 refers to a metal structure of the first electrode plate 111 that is configured to: carry the first active layer 1112, collect and output a current generated by the first active layer 1112, and input the current to the first active layer 1112.

The second active layer 1122 refers to a structural layer of the second electrode plate 112 that is formed by an active material, and is configured to deintercalate ions or intercalate ions in the process of charging and discharging of the battery 100 cell. The second active layer 1122 is disposed on two opposite sides of the second current collector 1121.

The second current collector 1121 refers to a metal structure of the second electrode plate 112 that is configured to: carry the second active layer 1122, collect and output a current generated by the second active layer 1122, and input the current to the second active layer 1122.

In an example, the first current collector 1111 is an aluminum foil, and the second current collector 1121 is a copper foil.

The first film material 1131 and the second film material 1132 are difference parts of the separator 113. The second film material 1132 is disposed on one end of the first film material 1131 along the first direction Z; or the second film material 1132 is disposed on two opposite ends of the first film material 1131 along the first direction Z.

When the second film material 1132 is disposed on two opposite ends of the first film material 1131 along the first direction Z: when the second film material 1132 is located only outside an end side of the first active layer 1112 along the first direction Z, the second film material 1132 on the two opposite ends may be respectively located outside the two opposite ends of the first active layer 1112 along the first direction Z. When the second film material 1132 is located only outside an end side of the second active layer 1122 along the first direction Z, as shown in FIG. 5 to FIG. 11, the second film material 1132 on two opposite ends may be respectively located outside two opposite ends of the second active layer 1122 along the first direction Z. When the second film material 1132 is located outside an end side of the first active layer 1112 along the first direction Z, and is also located outside an end side of the second active layer 1122 along the first direction Z, the second film material 1132 on two opposite ends are respectively located outside two opposite ends of the first active layer 1112 along the first direction Z, and are respectively located outside two opposite ends of the second active layer 1122 along the first direction Z.

That the first direction Z is parallel to the first electrode plate 111 and the second electrode plate 112 means that the first direction Z is parallel to a surface of the first electrode plate 111, and the first direction Z is parallel to a surface of the second electrode plate 112. Specifically, the first direction Z is parallel to the first current collector 1111 and the first active layer 1112, and the first direction Z is parallel to the second current collector 1121 and the second active layer 1122.

It should be noted that when the electrode assembly 11 is a stacked body, as shown in FIG. 5 and FIG. 6, the first direction Z is any direction parallel to the first electrode plate 111 and the second electrode plate 112. It may be understood that, the first direction Z is any direction perpendicular to a stacking direction of the first electrode plate 111 and the second electrode plate 112, that is, any direction on a plane perpendicular to the stacking direction of the first electrode plate 111 and the second electrode plate 112. The first direction Z may be one direction of the foregoing any direction, or may be a plurality of directions of the foregoing any direction. In an example, as shown in FIG. 5, the second film material 1132 is located outside an end side of the second active layer 1122 along the X axis, and is located outside an end side of the second active layer 1122 along the Z axis. In other words, the first direction Z includes a direction of the X axis and a direction of the Z axis. Certainly, in another example, the first direction Z may alternatively be a direction in which the Z axis is located, or may be a direction in which the X axis is located.

When the electrode assembly 11 is a winding body, as shown in FIG. 3, FIG. 4, and FIG. 7 to FIG. 11, the first direction Z is parallel to a central axis of the electrode assembly 11, and the first electrode plate 111, the separator 113, and the second electrode plate 112 are stacked and then wound around the central axis to form the electrode assembly 11.

When the second film material 1132 is located only outside an end side of the first active layer 1112 along the first direction Z, the second active layer 1122 is disposed extending beyond the first active layer 1112 along the first direction Z, so that at least a part of the second film material 1132 is disposed opposite to a part of the second active layer 1122 extending beyond the first active layer 1112, and is not located outside an end side of the second active layer 1122 along the first direction Z. In this way, the second film material 1132 is not opposite to the first active layer 1112 at all, and therefore, is not combined with and fixed to the first active layer 1112. In this way, the first active layer 1112 is not used for performing combination operation, and the first film material 1131 opposite to the first active layer 1112 and the part of the second active layer 1122 opposite to the first active layer 1112 are neither used for performing combination operation. In this way, a size of the first film material 1131 along the first direction Z is greater than or equal to a size of the first active layer 1112 along the first direction Z, so that a proportion of the first film material 1131 in the separator 113 is large, in other words, a large part of the separator 113 is not used for performing combination operation, and has good air permeability and a good ionic conducting capability, thereby improving charging and discharging performance of the battery 100 cell, and improving kinetic performance of the battery 100 cell.

When the second film material 1132 is located only outside an end side of the second active layer 1122 along the first direction Z, as shown in FIG. 6 to FIG. 11, the first active layer 1112 is disposed extending beyond the second active layer 1122 along the first direction Z, so that at least a part of the second film material 1132 is disposed opposite to a part of the first active layer 1112 extending beyond the second active layer 1122, and is not located outside an end side of the first active layer 1112 along the first direction Z. In this way, the second active layer 1122 is not opposite to the second film material 1132 at all, and therefore, is not combined with and fixed to the second active layer 1122. In this way, the second active layer 1122 is not used for performing combination operation, and the first film material 1131 opposite to the second active layer 1122 and the part of the first active layer 1112 opposite to the second active layer 1122 are neither used for performing combination operation. In this way, a size of the first film material 1131 along the first direction Z is greater than or equal to a size of the second active layer 1122 along the first direction Z, so that a proportion of the first film material 1131 in the separator 113 is large, in other words, a large part of the separator 113 is not used for performing combination operation, and has good air permeability and a good ionic conducting capability, thereby improving the charging and discharging performance of the battery 100 cell, and improving the kinetic performance of the battery 100 cell.

When the second film material 1132 is located outside an end side of the first active layer 1112 along the first direction Z, and is also located outside an end side of the second active layer 1122 along the first direction Z, the second film material 1132 is not opposite to the first active layer 1112 and the second active layer 1122 at all, and therefore, is not combined with and fixed to the first active layer 1112 and the second active layer 1122. In this way, the first active layer 1112 and the second active layer 1122 are not used for performing combination operation, and the first film material 1131 opposite to the first active layer 1112 and the second active layer 1122 is not used for performing combination operation. In this way, a size of the first film material 1131 along the first direction Z is greater than or equal to a size of the first active layer 1112 along the first direction Z and a size of the second active layer 1122 along the first direction Z, so that a proportion of the first film material 1131 in the separator 113 is large, in other words, a large part of the separator 113 is not used for performing combination operation, and has good air permeability and a good ionic conducting capability, thereby improving the charging and discharging performance of the battery 100 cell, and improving the kinetic performance of the battery 100 cell. An end side of the first active layer 1112 along the first direction Z may be flush with an end side of the second active layer 1122 along the first direction Z, the first active layer 1112 may alternatively extend beyond the second active layer 1122 along the first direction Z, and the second active layer 1122 may alternatively extend beyond the first active layer 1112 along the first direction Z.

When at least a part of the second film material 1132 is combined with and fixed to the first electrode plate 111 and the second electrode plate 112, a part of the second film material 1132 is combined with and fixed to the first electrode plate 111, and a part of the second film material 1132 is combined with and fixed to the second electrode plate 112. The part of the second film material 1132 combined with and fixed to the first electrode plate 111 and the part of the second film material 1132 combined with and fixed to the second electrode plate 112 may be disposed in an overlapping manner, or may not be disposed in an overlapping manner.

The second film material 1132 is located outside an end side of the first active layer 1112 and/or the second active layer 1122 along the first direction Z, and is at least partially combined with and fixed to the first electrode plate 111 and/or the second electrode plate 112. The first film material 1131 is opposite to the first active layer 1112 and the second active layer 1122, and is not used for performing combination operation. In this way, a proportion of the first film material 1131 in the separator 113 is large, in other words, a large part of the separator 113 is not used for combination operation, and has good air permeability and a good ionic conducting capability, thereby improving the charging and discharging performance of the battery 100 cell, to improve the kinetic performance of the battery 100 cell. In addition, because the second film material 1132 is located outside the end side of the first active layer 1112 and/or the second active layer 1122 along the first direction Z, the end side of the separator 113 along the first direction Z is used for performing combination operation, and a middle part of the separator 113 along the first direction Z is not used for performing combination operation. This facilitates deintercalation of ions on the first active layer 1112 and the second active layer 1122, thereby facilitating improving the charging and discharging performance of the battery 100 cell, and improving the kinetic performance of the battery 100 cell.

In addition, the second film material 1132 is located outside the end side of the first active layer 1112 and/or the second active layer 1122 along the first direction Z, so that the end side of the separator 113 along the first direction Z is used for performing combination operation. In this way, the problem of folding of the separator 113 can be effectively relieved, and further, the problem of self-discharging of the electrode assembly 11 caused by overlapping between the first electrode plate 111 and the second electrode plate 112 due to failure of the separator 113 in wrapping the electrode plate because of folding of the separator 113 can be relieved.

In some embodiments, refer to FIG. 6 to FIG. 11 together with reference to other accompanying drawings. The first active layer 1112 extends beyond the second active layer 1122 along the first direction Z, and the second film material 1132 is located outside an end side of the second active layer 1122 along the first direction Z.

The first active layer 1112 extends beyond the second active layer 1122 along the first direction Z, so that a size of the first active layer 1112 along the first direction Z is greater than a size of the second active layer 1122 along the first direction Z. In addition, in the first direction Z, the first active layer 1112 may completely cover the second active layer 1122. As shown in FIG. 6 to FIG. 11, the first active layer 1112 may extend beyond two opposite ends of the second active layer 1122 along the first direction Z; or the first active layer 1112 may extend beyond one end of the second active layer 1122 along the first direction Z.

In some possible designs, the first electrode plate 111 is a negative electrode plate, and the second electrode plate 112 is a positive electrode plate.

In this way, an active layer of the first electrode plate 111 extends beyond an active layer of the second electrode plate 112, so that a size of the active layer of the first electrode plate 111 along the first direction Z is greater than a size of the active layer of the second electrode plate 112 along the first direction Z. In this way, a problem that ions cannot be completely inserted into the first active layer 1112 after exiting from the second active layer 1122 can be relieved, and further, a problem that the ions accumulate outside of the first active layer 1112 and the second active layer 1122 and penetrate the separator 113, a problem of ion precipitation, and the like can be relieved. In addition, because the second film material 1132 is located outside the end side of the second active layer 1122 along the first direction Z, the second active layer 1122 is not combined with and fixed to the separator 113, so that the size of the first film material 1131 along the first direction Z is greater than or equal to the size of the second active layer 1122 along the first direction Z. Further, a proportion of the first film material 1131 in the separator 113 is large, in other words, a large part of the separator 113 is not used for performing combination operation, to facilitate deintercalation of ions on the first active layer 1112 and the second active layer 1122, thereby improving the charging and discharging performance of the battery 100 cell, and improving the kinetic performance of the battery 100 cell.

In addition, it should be noted that, the second film material 1132 is located outside an end side of the second active layer 1122 along the first direction Z, so that the second film material 1132 can be disposed opposite to a part of the first active layer 1112 beyond the second active layer 1122.

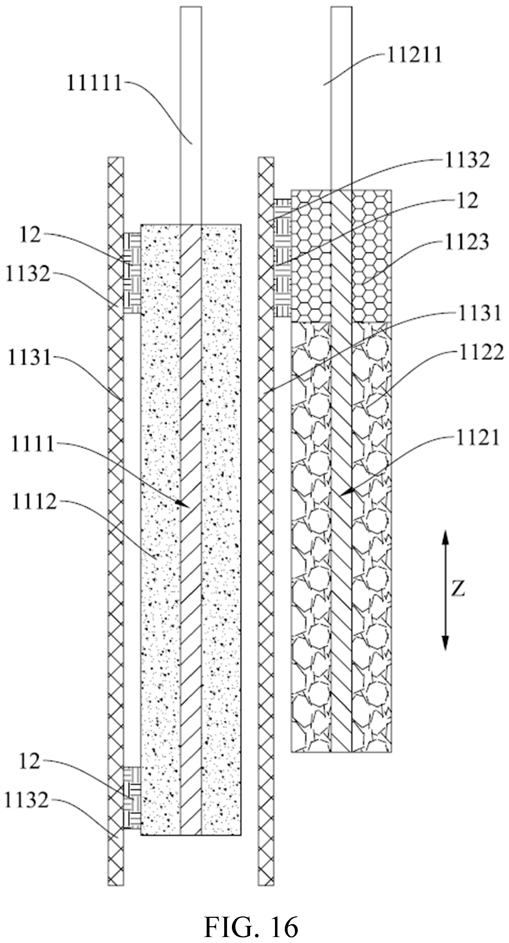

In some embodiments, refer to FIG. 6 to FIG. 11 and FIG. 16 together with reference to other accompanying drawings. FIG. 16 is a schematic diagram of the structure shown in FIG. 9 according to yet some other embodiments. The second film material 1132 further extends beyond the first active layer 1112 along the first direction Z.

In this way, the second film material 1132 can better achieve isolation between the second electrode plate 112 and the part of the first active layer 1112 extending beyond the second active layer 1122, to relieve the problem of overlapping between the first active layer 1112 and the second electrode plate 112.

In some embodiments, refer to FIG. 9 and FIG. 10 together with reference to other accompanying drawings. At least a part of the second film material 1132 is combined with and fixed to a part of the first active layer 1112 extending beyond the second active layer 1122 along the first direction Z.

It may be understood that, in some possible designs, as shown in FIG. 9 and FIG. 10, all of the second film material 1132 is combined with and fixed to the part of the first active layer 1112 extending beyond the second active layer 1122 along the first direction Z. Based on this, the second film material 1132 may be combined with and fixed to only a part of the first active layer 1112 extending beyond the second active layer 1122 along the first direction Z, as shown in FIG. 10; or the second film material 1132 may be combined with and fixed to a part of the first active layer 1112 extending beyond the second active layer 1122 along the first direction Z, and at least a part of the second film material 1132 may also be combined with and fixed to the insulation layer 1123 of the second electrode plate 112, as shown in FIG. 9. Alternatively, in some other possible designs, as shown in FIG. 16, a part of the second film material 1132 is combined with and fixed to a part of the first active layer 1112 extending beyond the second active layer 1122 along the first direction Z; and the other part of the second film material 1132 may not be used for performing combination operation, or may be combined with and fixed to the insulation layer 1123 of the second electrode plate 112 described below, or may be partially combined with and fixed to the insulation layer 1123, and partially not used for performing combination operation.

By using the foregoing technical solution, the second film material 1132 is located outside the end side of the second active layer 1122 along the first direction Z, and is opposite to and is combined with and fixed to the part of the first active layer 1112 extending beyond the second active layer 1122 along the first direction Z. In this way, combination and fixing between the second film material 1132 of the separator 113 and the first electrode plate 111 is implemented, so that insulation between the separator 113 and both the first electrode plate 111 and the second electrode plate 112 can be maintained, and a problem that the first electrode plate 111 and the second electrode plate 112 overlap caused by failure of the separator 113 in wrapping the electrode plate due to folding of the separator 113 is relieved.

In some embodiments, refer to FIG. 9, FIG. 10, and FIG. 16 together with reference to other accompanying drawings. One side or two opposite sides of at least a part of the first active layer 1112 extending beyond the second active layer 1122 along the first direction Z are combined with and fixed to the second film material 1132.

It may be understood that, in some possible designs, as shown in FIG. 16, one side of all parts of the first active layer 1112 extending beyond the second active layer 1122 along the first direction Z is combined with and fixed to the second film material 1132. Alternatively, in some other possible designs, as shown in FIG. 9 and FIG. 10, two opposite sides of all parts of the first active layer 1112 extending beyond the second active layer 1122 along the first direction Z are both combined with and fixed to the second film material 1132. Alternatively, in still some other possible designs, one side of a part of the first active layer 1112 extending beyond the second active layer 1122 along the first direction Z is combined with and fixed to the second film material 1132, and two opposite sides of another part of the first active layer 1112 extending beyond the second active layer 1122 along the first direction Z are both combined with and fixed to the second film material 1132. Alternatively, in still some other possible designs, one side of a part of the first active layer 1112 extending beyond the second active layer 1122 along the first direction Z is combined with and fixed to the second film material 1132, and the other part of the first active layer 1112 extending beyond the second active layer 1122 along the first direction Z is not used for performing combination operation. Alternatively, two opposite sides of a part of the first active layer 1112 extending beyond the second active layer 1122 along the first direction Z are both combined with and fixed to the second film material 1132, and the other part of the first active layer 1112 extending beyond the second active layer 1122 along the first direction Z is not used for performing combination operation.

In an example, as shown in FIG. 9 and FIG. 10, the separator 113 is disposed on two opposite sides of the first active layer 1112, and two opposite sides of the second active layer 1122 are respectively combined with and fixed to the second film material 1132 on the two opposite sides. In this way, the separator 113 can be better combined with and fixed to the first electrode plate 111.

By using the foregoing technical solution, the combination operation of the second film material 1132 and the part of the first active layer 1112 extending beyond the second active layer 1122 is very flexible.

In some embodiments, refer to FIG. 9, FIG. 10, and FIG. 16 together with reference to other accompanying drawings. In some possible designs, a part of the first active layer 1112 extending beyond one end of the second active layer 1122 along the first direction Z is combined with and fixed to the second film material 1132. Alternatively, in some other possible designs, as shown in FIG. 9 to FIG. 10 and FIG. 16, parts of the first active layer 1112 extending beyond two opposite ends of the second active layer 1122 along the first direction Z are all combined with and fixed to the second film material 1132.

The part of the first active layer 1112 extending beyond one end of the second active layer 1122 along the first direction Z is disposed to be combined with and fixed to the second film material 1132, so that a proportion of the part of the first active layer 1112 used for performing combination operation can be reduced, and a proportion of the part of the separator 113 not used for performing combination operation can be correspondingly increased. In other words, a large part of the separator 113 is not used for performing combination operation, and has good air permeability and a good ionic conducting capability. In this way, the first active layer 1112 can effectively deintercalate ions, thereby improving the charging and discharging performance of the battery 100 cell, to improve the kinetic performance of the battery 100 cell.

The part of the first active layer 1112 extending beyond two opposite ends of the second active layer 1122 along the first direction Z is disposed to be combined with and fixed to the second film material 1132, so that a combination and fixing effect of the separator 113 on the electrode assembly 11 can be improved. It should be further noted that, the part of the first active layer 1112 extending beyond two opposite ends of the second active layer 1122 along the first direction Z may be combined with and fixed to the second film material 1132 on the same side, or may be combined with and fixed to the second film material 1132 on two opposite sides.

In some embodiments, refer to FIG. 6 to FIG. 11 and FIG. 16 together with reference to other accompanying drawings. The second electrode plate 112 further includes an insulation layer 1123, the insulation layer 1123 is disposed on the second current collector 1121, and the insulation layer 1123 is disposed on an end side of the second active layer 1122 along the first direction Z. The insulation layer 1123 extends beyond the first active layer 1112 along the first direction Z, and is disposed opposite to the second film material 1132.

The insulation layer 1123 refers to a structural layer made of an insulating material. The insulation layer 1123 is disposed on two opposite sides of the first current collector 1111.

The insulation layer 1123 is disposed opposite to the second film material 1132, so that the insulation layer 1123 is also disposed opposite to the part of the first active layer 1112 extending beyond the second active layer 1122 along the first direction Z.

The insulation layer 1123 is disposed on one end of the second active layer 1122 along the first direction Z. Alternatively, the insulation layer 1123 is disposed on two opposite ends of the second active layer 1122 along the first direction Z.

The insulation layer 1123 is disposed on the end side of the second active layer 1122 along the first direction Z, and extends beyond the first active layer 1112 along the first direction Z, so that the insulation layer 1123 can achieve an insulation effect between the first active layer 1112 and the second current collector 1121, and can further relieve the problem that the first active layer 1112 penetrates the separator 113 and overlaps the second current collector 1121.

In some embodiments, refer to FIG. 9, FIG. 11, and FIG. 16 together with reference to other accompanying drawings. At least a part of the second film material 1132 is combined with and fixed to the insulation layer 1123.

It may be understood that, in some possible designs, a part of the second film material 1132 is combined with and fixed to the insulation layer 1123; the other part of the second film material 1132 may not be used for performing combination operation, or may be combined with and fixed to a part of the first active layer 1112 extending beyond the second active layer 1122 along the first direction Z, or may be partially combined with and fixed to a part of the first active layer 1112 extending beyond the second active layer 1122 along the first direction Z, and partially not used for performing combination operation. Alternatively, in some other possible designs, as shown in FIG. 9, FIG. 11, and FIG. 16, all of the second film material 1132 is combined with and fixed to the insulation layer 1123.

In addition, it should be noted that, the second film material 1132 is disposed opposite to the insulation layer 1123, and the second film material 1132 is disposed opposite to a part of the first active layer 1112 extending beyond the second active layer 1122 along the first direction Z. Based on this, in an example, as shown in FIG. 9, the second film material 1132 may be combined with and fixed to both a part of the first active layer 1112 extending beyond the second active layer 1122 along the first direction Z and the insulation layer 1123. Specifically, one side of the second film material 1132 is combined with and fixed to a part of the first active layer 1112 extending beyond the second active layer 1122 along the first direction Z, and the other side is combined with and fixed to the insulation layer 1123.

At least a part of the second film material 1132 is combined with and fixed to the insulation layer 1123, so that the second film material 1132 can be fixedly located between the insulation layer 1123 and the part of the first active layer 1112 that extends beyond the second active layer 1122 along the first direction Z. In this way, the separator 113 can effectively achieve insulation between the first electrode plate 111 and the second electrode plate 112, thereby relieving the problem that the first active layer 1112 and the second current collector 1121 overlap, in other words, relieving a problem of self-discharging of the electrode assembly 11 caused by overlapping between the first electrode plate 111 and the second electrode plate 112.

In some embodiments, refer to FIG. 6 to FIG. 9, FIG. 11, and FIG. 16 together with reference to other accompanying drawings. One side or two opposite sides of at least a part of the insulation layer 1123 are combined with and fixed to the second film material 1132.

It may be understood that, in some possible designs, as shown in FIG. 7 to FIG. 9, FIG. 11, and FIG. 16, one side of all of the insulation layer 1123 is combined with and fixed to the second film material 1132. Alternatively, in some other possible designs, as shown in FIG. 6, the second film material 1132 is disposed on two opposite sides of all of the insulation layer 1123, and two opposite sides of all of the insulation layer 1123 are both combined with and fixed to a corresponding second film material 1132. Alternatively, in still some other possible designs, one side of a part of the insulation layer 1123 is combined with and fixed to the second film material 1132, and two opposite sides of the other part of the insulation layer 1123 are both combined with and fixed to the second film material 1132. Alternatively, in yet some other possible designs, one side of a part of the insulation layer 1123 is combined with and fixed to the second film material 1132, and the other part of the insulation layer 1123 is not used for performing combination operation. Alternatively, two opposite sides of a part of the insulation layer 1123 are combined with and fixed to the second film material 1132, and the other part of the insulation layer 1123 is not used for performing combination operation.

By using the foregoing technical solution, one side or two sides of at least a part of the insulation layer 1123 are combined with and fixed to the second film material 1132, so that the combination operation of the second electrode plate 112 and the separator 113 is very flexible.

In some embodiments, refer to FIG. 9, FIG. 11, and FIG. 16 together with reference to other accompanying drawings. A second tab 11211 is disposed on the second current collector 1121, and the second tab 11211 is located outside one end of the second active layer 1122 along the first direction Z. In the first direction Z, the insulation layer 1123 is located between the second active layer 1122 and the second tab 11211.

The second tab 11211 is a tab disposed on the second electrode plate 112, and the second tab 11211 is formed through extension of the second current collector 1121.

In the first direction Z, the insulation layer 1123 is located between the second active layer 1122 and the second tab 11211, so that the insulation layer 1123 is disposed at a position between the second active layer 1122 and the second tab 11211 on the second current collector 1121.

The insulation layer 1123 is located between the second active layer 1122 and the second tab 11211, and extends beyond one end of the first active layer 1112 far away from the second active layer 1122 along the first direction Z. In this way, the insulation layer 1123 can implement insulation between the first active layer 1112 and the second current collector 1121, and can relieve a problem that an end of the first active layer 1112 along the first direction Z penetrates the second film material 1132 and overlaps the second current collector 1121.

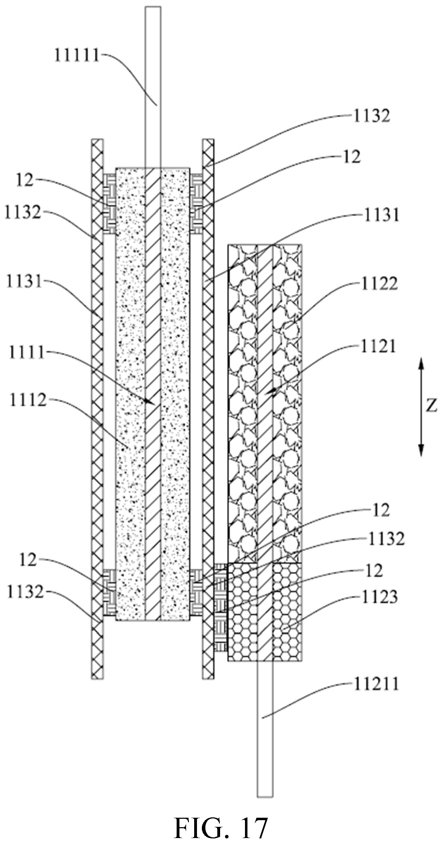

In some embodiments, refer to FIG. 9, FIG. 11, FIG. 16, and FIG. 17 together with reference to other accompanying drawings. FIG. 17 is a schematic diagram of the structure shown in FIG. 9 according to yet some other embodiments. A first tab 11111 is disposed on the first current collector 1111, and the first tab 11111 is disposed on one end of the first active layer 1112 along the first direction Z. A second tab 11211 is disposed on the second current collector 1121. In some possible designs, as shown in FIG. 9, FIG. 11, and FIG. 16, the second tab 11211 is located on one end of the second active layer 1122 close to the first tab 11111 along the first direction Z. Alternatively, in some other possible designs, as shown in FIG. 17, the second tab 11211 is located on one end of the second active layer 1122 far away from the first tab 11111 along the first direction Z.

The first tab 11111 is a tab disposed on the first electrode plate 111, and the first tab 11111 is formed through extension of the first current collector 1111.

As shown in FIG. 9, FIG. 11, and FIG. 16, the second tab 11211 is located on one end of the second active layer 1122 close to the first tab 11111 along the first direction Z. It may be understood that, the first tab 11111 and the second tab 11211 are located on the same side of the electrode assembly 11 along the first direction Z.

As shown in FIG. 7, the second tab 11211 is located on one end of the second active layer 1122 far away from the first tab 11111 along the first direction Z. It may be understood that, the first tab 11111 and the second tab 11211 are respectively located on two opposite sides of the electrode assembly 11 along the first direction Z.

The insulation layer 1123 is disposed between the second tab 11211 and the second active layer 1122 along the first direction Z. It may be understood that, the insulation layer 1123 is disposed on one end of the second current collector 1121 close to the second tab 11211 along the first direction Z.

In this way, the first tab 11111 and the second tab 11211 can be disposed on the same side or two opposite sides of the electrode assembly 11 along the first direction Z. In this way, the insulation layer 1123 can be located at one end of the second current collector 1121 close to or far away from the first tab 11111 along the first direction Z, to implement insulation between the second current collector 1121 and the first active layer 1112, and relieve a problem that the end of the first active layer 1112 penetrates the separator 113 and overlaps the second current collector 1121.

In some embodiments, refer to FIG. 9 to FIG. 11, FIG. 16, and FIG. 17 together with reference to other accompanying drawings. As shown in FIG. 9 to FIG. 11, FIG. 16, and FIG. 17, one side of at least a part of the second film material 1132 is combined with and fixed to the first electrode plate 111 or the second electrode plate 112; and/or as shown in FIG. 9 and FIG. 17, two opposite sides of at least a part of the second film material 1132 are respectively combined with and fixed to the first electrode plate 111 and the second electrode plate 112.

It may be understood that, in some possible designs, as shown in FIG. 10, FIG. 11, and FIG. 16, one side of all of the second film material 1132 is combined with and fixed to the first electrode plate 111 or the second electrode plate 112. Alternatively, in some other possible designs, two opposite sides of all the second film material 1132 are respectively combined with and fixed to the first electrode plate 111 and the second electrode plate 112. Alternatively, in still some other possible designs, as shown in FIG. 9 and FIG. 17, one side of a part of the second film material 1132 is combined with and fixed to the first electrode plate 111 or the second electrode plate 112, and two opposite sides of the other part of the second film material 1132 are respectively combined with and fixed to the first electrode plate 111 and the second electrode plate 112. Alternatively, in yet some other possible designs, one side of a part of the second film material 1132 is combined with and fixed to the first electrode plate 111 or the second electrode plate 112, and the other part of the second film material 1132 is not used for performing combination operation. Alternatively, two opposite sides of a part of the second film material 1132 are respectively combined with and fixed to the first electrode plate 111 and the second electrode plate 112, and the other part of the second film material 1132 is not used for performing combination operation.

That two opposite sides of the second film material 1132 are respectively combined with and fixed to the first electrode plate 111 and the second electrode plate 112 specifically means that one side of the second film material 1132 is combined with and fixed to the first electrode plate 111, and the other side of the second film material 1132 is combined with and fixed to the second electrode plate 112. Based on this, the combination and fixing effect of the second film material 1132 can be improved, to better maintain the insulation effect of the second separator 113b on the first electrode plate 111 and the second electrode plate 112.

In this way, the combination operation of the second film material 1132 on the electrode assembly 11 is very flexible.

In some embodiments, refer to FIG. 9 and FIG. 10 together with reference to other accompanying drawings. The second film material 1132 is disposed on two opposite ends of the first film material 1131 along the first direction Z, and the second film material 1132 on each end of the first film material 1131 along the first direction Z is combined with and fixed to the first electrode plate 111 and/or the second electrode plate 112.

That the second film material 1132 on each end of the first film material 1131 along the first direction Z is combined with and fixed to the first electrode plate 111 and/or the second electrode plate 112 means that the second film material 1132 on each end along the first direction Z may be combined with and fixed to the first electrode plate 111, or may be combined with and fixed to the second electrode plate 112, or may be combined with and fixed to both the first electrode plate 111 and the second electrode plate 112.

In this way, the second film materials 1132 on two opposite ends of the first film material 1131 along the first direction Z can perform combination, so that the second film material 1132 on two opposite ends of the separator 113 along the first direction Z are fixed relative to the first electrode plate 111 and the second electrode plate 112. In this way, the problem of self-discharging of the electrode assembly 11 caused by overlapping between the first electrode plate 111 and the second electrode plate 112 due to failure of the separator 113 in wrapping the electrode plate because of folding of the separator 113 can be relieved, and an insulation effect between the separator 113 and both the first electrode plate 111 and the second electrode plate 112 can be well maintained.

Based on the foregoing structure, in some embodiments, as shown in FIG. 9 to FIG. 11, FIG. 16, and FIG. 17, the first active layer 1112 extends beyond the second active layer 1122 along the first direction Z, and the second film material 1132 is located on an end side of the second active layer 1122 along the first direction Z. Based on this, that at least a part of the second film material 1132 is combined with and fixed to the first electrode plate 111 and/or the second electrode plate 112 means that at least a part of the second film material 1132 may be combined with and fixed to a part of the first active layer 1112 extending beyond the second active layer 1122 along the first direction Z; or may be combined with and fixed to the insulation layer 1123 on the second current collector 1121; or one side may be combined with and fixed to a part of the first active layer 1112 extending beyond the second active layer 1122 along the first direction Z, and the other side may be combined with and fixed to the insulation layer 1123 on the second current collector 1121.

In some other embodiments, the second active layer 1122 may also extend beyond the first active layer 1112 along the first direction Z, and the second film material 1132 is located on an end side of the first active layer 1112 along the first direction Z. Based on this, the insulation layer 1123 may alternatively be disposed on the first current collector 1111, and the insulation layer 1123 is located on an end side of the first active layer 1112 along the first direction Z. Based on this, that at least a part of the second film material 1132 is combined with and fixed to the first electrode plate 111 and/or the second electrode plate 112 means that at least a part of the second film material 1132 may be combined with and fixed to a part of the second active layer 1122 extending beyond the first active layer 1112 along the first direction Z; or may be combined with and fixed to the insulation layer 1123 on the first current collector 1111; or one side may be combined with and fixed to a part of the second active layer 1122 extending beyond the first active layer 1112 along the first direction Z, and the other side may be combined with and fixed to the insulation layer 1123 on the first current collector 1111.

In some other embodiments, the second film material 1132 is located on an end side of the first active layer 1112 and the second active layer 1122 along the first direction Z. In this case, the foregoing insulation layer 1123 may be disposed on both the first current collector 1111 and the second current collector 1121. The insulation layer 1123 of the first current collector 1111 is located on an end side of the first active layer 1112 along the first direction Z, and the insulation layer 1123 of the second current collector 1121 is located on an end side of the second active layer 1122 along the first direction Z. Based on this, that at least a part of the second film material 1132 is combined with and fixed to the first electrode plate 111 and/or the second electrode plate 112 means that at least a part of the second film material 1132 may be combined with and fixed to the insulation layer 1123 on the first current collector 1111; or may be combined with and fixed to the insulation layer 1123 on the second current collector 1121; or one side may be combined with and fixed to the insulation layer 1123 on the first current collector 1111, and the other side may be combined with and fixed to the insulation layer 1123 on the second current collector 1121.

It may be understood that, that the second film material 1132 is combined with and fixed to the first electrode plate 111 means that the second film material 1132 is combined with and fixed to the first active layer 1112 of the first electrode plate 111, or means that the second film material 1132 is combined with and fixed to the insulation layer 1123 of the first electrode plate 111. Correspondingly, that the second film material 1132 is combined with and fixed to the second electrode plate 112 means that the second film material 1132 is combined with and fixed to the insulation layer 1123 of the second electrode plate 112, or the second film material 1132 is combined with and fixed to the second active layer 1122 of the second electrode plate 112.

In addition, it should be noted that, the foregoing one side refers to a surface on one side, and the foregoing two opposite sides refers to surfaces of the two opposite sides. For reference, one side of the insulation layer 1123 refers to a surface on a side of the insulation layer 1123; and two opposite sides of the insulation layer 1123 refer to surfaces on two opposite sides of the insulation layer 1123.

As shown in FIG. 9 to FIG. 11, FIG. 16, and FIG. 17, the electrode assembly 11 includes the first electrode plate 111, the second electrode plate 112, the first separator 113a, and the second separator 113b. The first separator 113a, the first electrode plate 111, the second separator 113b, and the second electrode plate 112 are sequentially stacked or stacked and wound. The second film material 1132 is disposed on two ends of the first separator 113a opposite along the first direction Z and two ends of the second separator 113b opposite along the first direction Z. Combination and fixing may be implemented between one end of the first separator 113a along the first direction Z and the first active layer 1112, between the other end of the first separator 113a along the first direction Z and the first active layer 1112, between one end of the second separator 113b along the first direction Z and the first active layer 1112, between one end of the second separator 113b along the first direction Z and the insulation layer 1123, and between the other end of the second separator 113b along the first direction Z and the first active layer 1112. In other words, combination and fixing may be implemented on five areas in total. In an actual application, combination and fixing may be implemented on at least one of the foregoing five areas, so that a part of the separator 113 is combined with and fixed to the first electrode plate 111 and/or the second electrode plate 112.

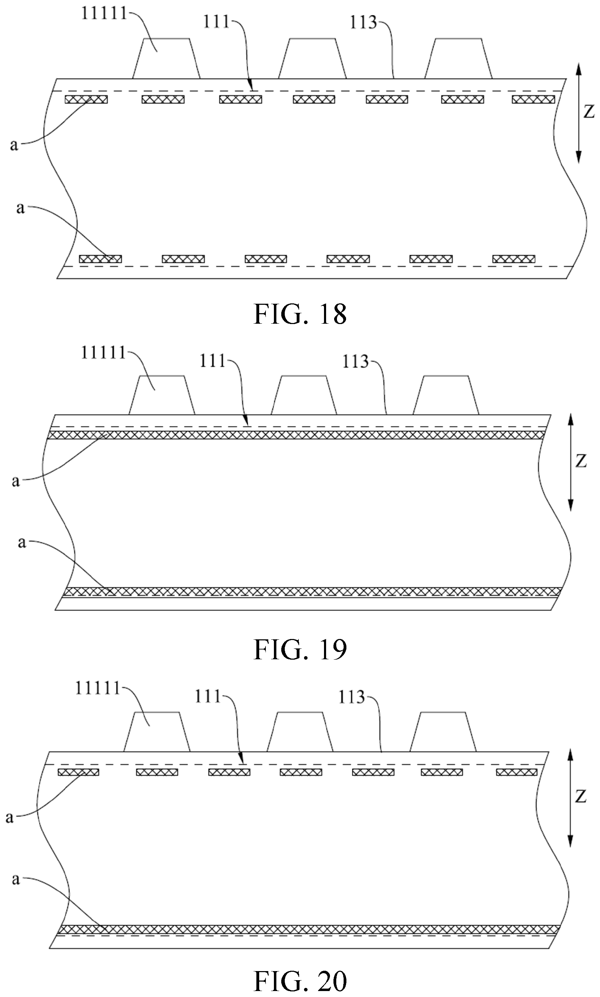

In some embodiments, refer to FIG. 18 to FIG. 20 together with reference to other accompanying drawings. FIG. 18 is a schematic diagram of a first electrode plate 111 and a separator 113 of the electrode assembly 11 shown in FIG. 3 after being stacked and before being wound, FIG. 19 is a schematic diagram of the structure shown in FIG. 18 according to another embodiment, and FIG. 20 is a schematic diagram of the structure shown in FIG. 18 according to still another embodiment. In FIG. 18 to FIG. 20, the first electrode plate 111 is shown by using dashed lines, and a first composite structure a is shown by using shadow parts. The second film material 1132 is combined with the first electrode plate 111 to form the first composite structure a. In some possible designs, as shown in FIG. 18, first composite structures a on ends of the first electrode plate 111 in the first direction Z are spaced apart. Alternatively, in some other possible designs, as shown in FIG. 19, first composite structures a on ends of the first electrode plate 111 in the first direction Z are continuously disposed. Alternatively, in still some other possible designs, as shown in FIG. 20, the first electrode plate 111 forms two groups of first composite structures a, the two groups of first composite structures a are spaced apart along the first direction Z, one group of first composite structures a are spaced apart, and the other group of first composite structures a are continuously disposed.

The first composite structure a refers to a structure formed by combining the second film material 1132 and the first electrode plate 111.

It should be noted that, the second film material 1132 is disposed on one end of the first active layer 1112 and/or the second active layer 1122 along the first direction Z; or the second film material 1132 is disposed on two opposite ends of the first active layer 1112 and/or the second active layer 1122 along the first direction Z. Based on this, the first electrode plate 111 may be combined with and fixed to the second film material 1132 at one end along the first direction Z, or may be combined with and fixed to the second film material 1132 at two opposite ends along the first direction Z. In this way, the first composite structure a is disposed on one end of the first electrode plate 111 along the first direction Z has, or the first composite structure a is disposed on two opposite ends of the first electrode plate 111 along the first direction Z.

That one group of first composite structures a are spaced apart, and the other group of first composite structures a are continuously disposed means that first composite structures a on one end of the first electrode plate 111 along the first direction Z are spaced apart, and first composite structures a on the other end of the first electrode plate 111 along the first direction Z are continuously disposed.

By using the foregoing technical solution, the combination operation of the first electrode plate 111 and the second film material 1132 is very flexible.

It should be further noted that, the first composite structures a on ends of the first electrode plates 111 in the first direction Z are spaced apart, so that only a part of the second film material 1132 is used for performing combination operation, and the other part is not used for performing combination operation. In this way, a part of the second film material 1132 can also have good air permeability and a good ionic conducting capability, so that a larger part of the separator 113 is not used for performing combination operation. The good air permeability and ionic conducting capability facilitates deintercalation of ions between the first electrode plate 111 and the second electrode plate 112, thereby facilitating improving charging and discharging performance of the battery 100 cell, and improving kinetic performance of the battery 100 cell. The first composite structures a on ends of the first electrode plate 111 in the first direction Z are continuously disposed, so that the combination and fixing operation of the first electrode plate 111 and the second film material 1132 is very simple.

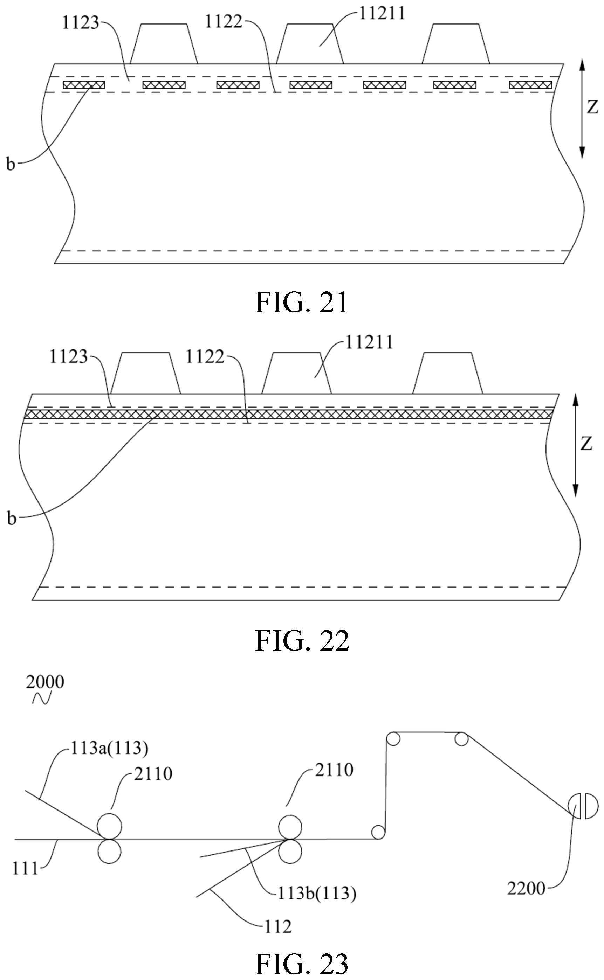

In some embodiments, refer to FIG. 21 and FIG. 22 together with reference to other accompanying drawings. FIG. 21 is a schematic diagram of a second electrode plate 112 and a separator 113 of the electrode assembly 11 shown in FIG. 3 after being stacked and before being wound, and FIG. 22 is a schematic diagram of the structure shown in FIG. 21 according to another embodiment. In FIG. 21 and FIG. 22, the second electrode plate 112 is shown by using dashed lines, and the second composite structure b is shown by using shadow parts. The second film material 1132 is combined with the second electrode plate 112 to form the second composite structure b. In some possible designs, as shown in FIG. 20, second composite structures b on the second electrode plate 112 are spaced apart. Alternatively, in some other possible designs, as shown in FIG. 21, second composite structures b on the second electrode plate 112 are continuously disposed.

The second composite structure b refers to a structure formed by combining the second film material 1132 and the second electrode plate 112.

By using the foregoing technical solution, the combination operation of the second electrode plate 112 and the second film material 1132 is very flexible.

In some embodiments, refer to FIG. 13 to FIG. 15 and other accompanying drawings. The separator 113 includes a substrate 1133 and a bonding layer 1134, and the bonding layer 1134 is disposed on two opposite sides of the substrate 1133. In some possible designs, the separator 113 is adhered to the first electrode plate 111 through the bonding layer 1134, to be combined with and fixed to the first electrode plate 111. Alternatively, in some other possible designs, the separator 113 is adhered to the second electrode plate 112 through the bonding layer 1134, to be combined with and fixed to the second electrode plate 112. Alternatively, in still some other possible designs, the separator 113 is adhered to the first electrode plate 111 and the second electrode plate 112 through the bonding layer 1134, to be combined with and fixed to the first electrode plate 111 and the second electrode plate 112.

The substrate 1133 refers to a structural layer of the separator 113 used for carrying the bonding layer 1134, and the bonding layer 1134 refers to a structural layer disposed on the substrate 1133 and used for adhesion. The substrate 1133 and the bonding layer 1134 can both be used for ions to pass.

It may be understood that, in the combination operation process, the separator 113 is adhered and fixed by using the bonding layer 1134 of the separator 113, to achieve the combination and fixing effect.

That the separator 113 is adhered to the first electrode plate 111 and the second electrode plate 112 through the bonding layer 1134 specifically means that the bonding layer 1134 on one side of the separator 113 is adhered to the first electrode plate 111, and the bonding layer 1134 on the other side of the separator 113 is adhered to the second electrode plate 112, so that the separator 113 is combined with and fixed to the first electrode plate 111 and the second electrode plate 112.

In some embodiments, refer to FIG. 6 to FIG. 11, FIG. 16, and FIG. 17 with reference to other accompanying drawings. The electrode assembly 11 may further include a first adhesive layer 12, and the first adhesive layer 12 is disposed on the separator 113. In some possible designs, the separator 113 is adhered to the first electrode plate 111 through the first adhesive layer 12, to be combined with and fixed to the first electrode plate 111. Alternatively, in some other possible designs, the separator 113 is adhered to the second electrode plate 112 through the first adhesive layer 12, to be combined with and fixed to the second electrode plate 112. Alternatively, in still some other possible designs, the separator 113 is adhered to the first electrode plate 111 and the second electrode plate 112 through the first adhesive layer 12, to be combined with and fixed to the first electrode plate 111 and the second electrode plate 112.

The first adhesive layer 12 refers to a structural layer having an adhering capability.

It may be understood that, in the combination operation process, the first adhesive layer 12 is adhered to the separator 113, and is adhered to the first electrode plate 111 and/or the second electrode plate 112, to achieve the combination and fixing effect.

In some embodiments, the electrode assembly 11 may further include a second adhesive layer, and the second adhesive layer is disposed on the first electrode plate 111. The first electrode plate 111 is adhered to the separator 113 through the second adhesive layer, to be combined with and fixed to the separator 113.

The second adhesive layer refers to a structural layer having an adhering capability.

It may be understood that, in the combination operation process, the second adhesive layer adheres the separator 113 to the first electrode plate 111, to achieve the combination and fixing effect of the separator 113 and the first electrode plate 111.

In an example, the second adhesive layer is disposed on the first active layer 1112 of the first electrode plate 111.

In some embodiments, the electrode assembly 11 may further include a third adhesive layer, and the third adhesive layer is disposed on the second electrode plate 112. The second electrode plate 112 is adhered to the separator 113 through the second adhesive layer, to be combined with and fixed to the separator 113.

The third adhesive layer refers to a structural layer having an adhering capability.

It may be understood that, in the combination operation process, the third adhesive layer adheres the separator 113 to the second electrode plate 112, to achieve the combination and fixing effect of the separator 113 and the second electrode plate 112.

In an example, the third adhesive layer is disposed on the insulation layer 1123 of the second electrode plate 112.

It should be further noted that, one of the foregoing several embodiments may be selected, or any plurality of the foregoing embodiments may be combined. In an example, the first adhesive layer 12 and the second adhesive layer may be both disposed. In this way, the first adhesive layer 12 is adhered to the second adhesive layer, to implement combination and fixing between the separator 113 and the first electrode plate 111.

By using the foregoing technical solution, in a combination operation process, the separator 113 achieves a combination and fixing effect in an adhering manner.

In some embodiments, refer to FIG. 4 and FIG. 12 to FIG. 15 together with reference to other accompanying drawings. The first electrode plate 111 and the second electrode plate 112 layer are stacked and wound. In addition, in some possible designs, as shown in FIG. 4 and FIG. 12 to FIG. 15, the electrode assembly 11 is in a flat shape. Alternatively, in some other possible designs, as shown in FIG. 13, the electrode assembly 11 is in a cylindrical shape.

It should be noted that, after the first electrode plate 111, the separator 113, and the second electrode plate 112 are stacked and wound, a pressing and shaping operation may be performed on an integrity formed through winding, to obtain the electrode assembly 11 in the flat shape.

The electrode assembly 11 is disposed to be a flat or cylindrical structure formed by the first electrode plate 111 and the second electrode plate 112 that are stacked and wound, and a part of the separator 113 is combined with and fixed to the first electrode plate 111 and/or the second electrode plate 112, so that the bonding layer 1134 on the separator 113 can provide a proper buffer between the first electrode plate 111 and the second electrode plate 112, and a problem of cracking of the first electrode plate 111 and/or the second electrode plate 112 in a charging and discharging process of the battery 100 cell can be relieved.

Refer to FIG. 2 with reference to other accompanying drawings. The battery 100 provided in the embodiments of the present application includes a battery 100 cell. The battery 100 cell in this embodiment is the same as the battery 100 cell in the previous embodiment. For details, refer to related descriptions of the battery 100 cell in the previous embodiment, and details are not described herein again.

In the battery 100 provided in the embodiments of the present application, by using the foregoing battery 100 cell, only a part of the separator 113 is used for performing combination operation, and other parts of the separator 113 are not used for performing combination operation. In this way, a problem of poor overall air permeability of the separator 113 can be relieved, helping to improve an ionic conducting capability of the separator 113, and further helping to improve charging and discharging performance of the battery 100 cell, to improve kinetic performance of the battery 100 cell.

Referring to FIG. 1, the electrical apparatus provided in the embodiments of the present application includes a battery 100 cell or a battery 100. The battery 100 cell and the battery 100 in this embodiment are the same as the battery 100 cell and the battery 100 in the previous embodiment. For details, refer to related descriptions of the battery 100 cell and the battery 100 in the previous embodiment, and details are not described herein again.

The electrical apparatus provided in the embodiments of the present application uses the foregoing battery 100 cell or battery 100, helping to improve charging and discharging performance of the battery 100 cell, to improve kinetic performance of the battery 100 cell, thereby improving reliability of the electrical apparatus.

Refer to FIG. 12 to FIG. 23 together with reference to other accompanying drawings. FIG. 23 is a schematic diagram of the combination apparatus 2100 according to some embodiments of the present application. The combination apparatus 2100 provided in the embodiments of the present application is applied to a battery 100 cell. In some possible designs, the combination apparatus 2100 is configured to combine and fix only a part of the separator 113 to the first electrode plate 111. Alternatively, in some other possible designs, the combination apparatus 2100 is configured to combine and fix only a part of the separator 113 to the second electrode plate 112. Alternatively, in still some other possible designs, the combination apparatus 2100 is configured to combine and fix a part of the separator 113 to the first electrode plate 111 and the second electrode plate 112. The battery 100 cell in this embodiment is the same as the battery 100 cell in the previous embodiment. For details, refer to related descriptions of the battery 100 cell in the previous embodiment, and details are not described herein again.

The combination apparatus 2100 provided in the embodiments of the present application is configured to combine and fix the part of the separator 113 to the first electrode plate 111 and/or the second electrode plate 112, so that only a part of the separator 113 is used for performing combination operation, and other parts of the separator 113 are not used for performing combination operation. In this way, a problem of poor overall air permeability of the separator 113 can be relieved, helping to improve an ionic conducting capability of the separator 113, and further helping to improve charging and discharging performance of the battery 100 cell, to improve kinetic performance of the battery 100 cell.

In some embodiments, refer to FIG. 12 to FIG. 23 together with reference to other accompanying drawings. The combination apparatus 2100 includes a combination mechanism 2110, and the combination mechanism 2110 is configured to perform combination operation. In some possible designs, as shown in FIG. 12, there is one combination mechanism 2110. Alternatively, in some other possible designs, as shown in FIG. 23, there are a plurality of combination mechanisms 2110, and the plurality of combination mechanisms 2110 are configured to sequentially perform combination operation.

Specifically, the combination mechanism 2110 is configured to perform combination operation on the separator 113 and at least one of the first electrode plate 111 and the second electrode plate 112, to achieve a combination and fixing effect between the separator 113 and the at least one of the first electrode plate 111 and the second electrode plate 112.

In an embodiment in which there is one combination mechanism 2110, when the separator 113 only needs to be combined with and fixed to the first electrode plate 111, only the first electrode plate 111 and the separator 113 need to pass through the combination mechanism 2110, and the second electrode plate 112 does not need to pass through the combination mechanism 2110 to perform combination operation. Correspondingly, when the separator 113 only needs to be combined with and fixed to the second electrode plate 112, only the second electrode plate 112 and the separator 113 need to pass through the combination mechanism 2110, and the first electrode plate 111 does not need to pass through the combination mechanism 2110 to perform combination operation. When the separator 113 needs to be combined with and fixed to the first electrode plate 111 and the second electrode plate 112, as shown in FIG. 12, a stacked structure of the first electrode plate 111, the separator 113, and the second electrode plate 112 need to pass through the combination mechanism 2110, to perform combination and fixing operation.

In an embodiment in which there are a plurality of combination mechanisms 2110, an example in which there are two separators 113, the two separators 113 are respectively the first separator 113a and the second separator 113b, and the first separator 113a, the first electrode plate 111, the second separator 113b, and the second electrode plate 112 are stacked and wound to form the electrode assembly 11 is used: When the separator 113 only needs to be combined with and fixed to the first electrode plate 111, the first separator 113a may be first combined and fixed to the first electrode plate 111 by passing through the first combination mechanism 2110, and are then combined with and fixed to the second separator 113b by passing through the second combination mechanism 2110. Based on this, the first combination mechanism 2110 may be combine and fix the second film material 1132 on at least one end of the first separator 113a along the first direction Z to the first electrode plate 111, and the second combination mechanism 2110 may also be combine and fix the second film material 1132 on at least one end of the second separator 113b along the first direction Z to the first electrode plate 111. In an example, the first combination mechanism 2110 combines and fixes one end of the first electrode plate 111 along the first direction Z to the first separator 113a, and the second combination mechanism 2110 combines and fixes the other end of the first electrode plate 111 along the first direction Z to the second separator 113b.

When the separator 113, the first electrode plate 111, and the second electrode plate 112 need to be combined and fixed, the first separator 113a and the first electrode plate 111 may be combined and fixed first by passing through the first combination mechanism 2110, and then are combined with and fixed to the second separator 113b and the second electrode plate 112 by passing through the second combination mechanism 2110, as shown in FIG. 23. Alternatively, the first separator 113a, the first electrode plate 111, and the second separator 113b may be first combined and fixed by passing through the first combination mechanism 2110, and then are combined with and fixed to the second electrode plate 112 by passing through the second combination mechanism 2110. Even, the first separator 113a and the first electrode plate 111 may be first combined and fixed by passing through the first combination mechanism 2110, then may be combined with and fixed to the second separator 113b by passing through the second combination mechanism 2110, and finally, are combined with and fixed to the second electrode plate 112 by passing through the third combination mechanism 2110, and so on. Then, when there are more than two separators 113, and there are a plurality of first electrode plates 111 and/or second electrode plates 112, the combination and fixing operation may be sequentially performed by using a plurality of combination mechanisms 2110. Based on this, each combination mechanism 2110 may perform combination and fixing operation on one or two ends of the separator 113 along the first direction Z.

By using the foregoing technical solution, the quantity of combination mechanisms 2110 can be selected based on a required combination and fixing effect, so that the combination operation is very flexible.

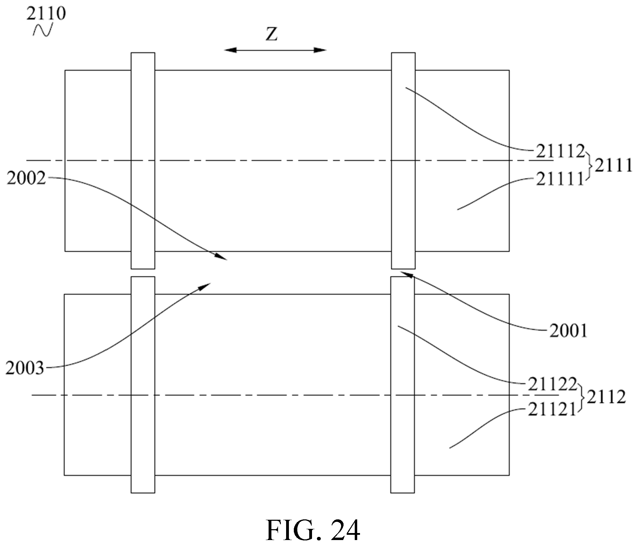

In some embodiments, refer to FIG. 24 with reference to other accompanying drawings. FIG. 24 is a schematic diagram of a combination mechanism 2110 of a combination apparatus 2100 according to some embodiments of the present application. The combination mechanism 2110 includes a first combination roller 2111 and a second combination roller 2112. The first combination roller 2111 includes a first rotating roller 21111 and a first convex part 21112 disposed on an outer peripheral side of the first rotating roller 21111. The first convex part 21112 and the second combination roller 2112 are configured to cooperate to perform rolling combination operation. The first convex part 21112 and the second combination roller 2112 are spaced apart to form a rolling gap. In addition, the first convex part 21112 and the first rotating roller 21111 define a first avoidance space 2002, and the first avoidance space 2002 is in communication with the rolling gap.

The first combination roller 2111 and the second combination roller 2112 are roll-shaped structures configured to cooperate to perform rolling operation. The first combination roller 2111 and the second combination roller 2112 are arranged in parallel, and a rotation direction of the first combination roller 2111 is opposite to a rotation direction of the second combination roller 2112.

The first rotating roller 21111 is a roll-shaped structure of the first combination roller 2111, and the first convex part 21112 is a part disposed on an outer peripheral side of the first rotating roller 21111 and configured to perform rolling operation.

Along a distribution direction of the first combination roller 2111 and the second combination roller 2112, the first convex part 21112 of the first combination roller 2111 is spaced apart from an outer peripheral side of the second combination roller 2112 to form the rolling gap. In addition, along the distribution direction of the first combination roller 2111 and the second combination roller 2112, a side of the first convex part 21112 far away from the first rotating roller 21111 is spaced apart from the first rotating roller 21111 to form the first avoidance space 2002.

The distribution direction of the first combination roller 2111 and the second combination roller 2112 is parallel to a radial direction of the first combination roller 2111, and is also parallel to a radial direction of the second combination roller 2112. In addition, the distribution direction of the first combination roller 2111 and the second combination roller 2112 is perpendicular to an axial direction of the first combination roller 2111 and an axial direction of the second combination roller 2112. Moreover, the axial direction of the first combination roller 2111 and the axial direction of the second combination roller 2112 are parallel to the first direction Z. In other words, the distribution direction of the first combination roller 2111 and the second combination roller 2112 is perpendicular to the first direction Z.

In a combination operation process, at least one of the first rotating roller 21111 and the second combination roller 2112 may be driven to rotate, and at least one of the first electrode plate 111 and the second electrode plate 112 forms a rolling gap with the separator 113 by using the first convex part 21112 and the second combination roller 2112, so that the first rotating roller 21111 and the second combination roller 2112 reversely rotate, and the first convex part 21112 and the second combination roller 2112 cooperate to roll the separator 113 and the at least one of the first electrode plate 111 and the second electrode plate 112, thereby achieving a combination and fixing effect between the separator 113 and the at least one of the first electrode plate 111 and the second electrode plate 112.

The first convex part 21112 is disposed on the outer peripheral side of the first rotating roller 21111 of the first combination roller 2111, so that the first convex part 21112 cooperates with the second combination roller 2112 to perform rolling operation, and the first convex part 21112 and the first rotating roller 21111 define the first avoidance space 2002 communicating with the rolling gap. In this way, the first convex part 21112 may cooperate with the second combination roller 2112 to roll a part of an integrity formed by the separator 113 and the at least one of the first electrode plate 111 and the second electrode plate 112, and the other part is avoided in the first avoidance space 2002 and is not used for performing combination and fixing operation. In this way, the problem of poor overall air permeability of the separator 113 can be relieved, helping to improve the ionic conducting capability of the separator 113, and further helping to improve the charging and discharging performance of the battery 100 cell, to improve the kinetic performance of the battery 100 cell.

It should be further noted that, when the combination operation needs to be performed on one end along the first direction Z of the integrity formed by the separator 113 and the at least one of the first electrode plate 111 and the second electrode plate 112, the first convex part 21112 is disposed on one end of the first rotating roller 21111 along the first direction Z. When the combination operation needs to be performed on both two ends along the first direction Z of the integrity formed by the separator 113 and the at least one of the first electrode plate 111 and the second electrode plate 112, the first convex part 21112 is disposed on both ends of the first rotating roller 21111 along the first direction Z.

In some embodiments, refer to FIG. 23 with reference to other accompanying drawings. The second combination roller 2112 includes a second rotating roller 21121 and a second convex part 21122 disposed on an outer periphery of the second rotating roller 21121. The second convex part 21122 is disposed opposite to the first convex part 21112, and are spaced apart to form the rolling gap. The second convex part 21122 and the second rotating roller 21121 define a second avoidance space 2003, and the second avoidance space 2003 is in communication with the rolling gap.

The second rotating roller 21121 is a roll-shaped structure of the second combination roller 2112, and the second convex part 21122 is a part disposed on an outer peripheral side of the second rotating roller 21121 and configured to perform rolling operation.

Along the distribution direction of the first combination roller 2111 and the second combination roller 2112, the first convex part 21112 of the first combination roller 2111 and the second convex part 21122 of the second combination roller 2112 are opposite, and are spaced apart to form the rolling gap. In addition, along the distribution direction of the first combination roller 2111 and the second combination roller 2112, a side of the second convex part 21122 far away from the second rotating roller 21121 is spaced apart from the second rotating roller 21121 to form the second avoidance space 2003.

In the combination operation process, the first convex part 21112 and the second convex part 21122 cooperate to roll a part of the integrity formed by the separator 113 and the at least one of the first electrode plate 111 and the second electrode plate 112, and the other part is avoided at the first avoidance space 2002 and the second avoidance space 2003, so that a part of the separator 113 is not used for performing combination operation. This can relieve a problem of poor overall air permeability of the separator 113, help improve an ionic conducting capability of the separator 113, and further help improve charging and discharging performance of the battery 100 cell, to improve kinetic performance of the battery 100 cell.

It should be further noted that, when the combination operation needs to be performed on one end along the first direction Z of the integrity formed by the separator 113 and the at least one of the first electrode plate 111 and the second electrode plate 112, the second convex part 21122 is disposed on one end of the second rotating roller 21121 along the first direction Z. When the combination operation needs to be performed on both ends along the first direction Z of the integrity formed by the separator 113 and the at least one of the first electrode plate 111 and the second electrode plate 112, the second convex part 21122 is disposed on both ends of the second rotating roller 21121 along the first direction Z.

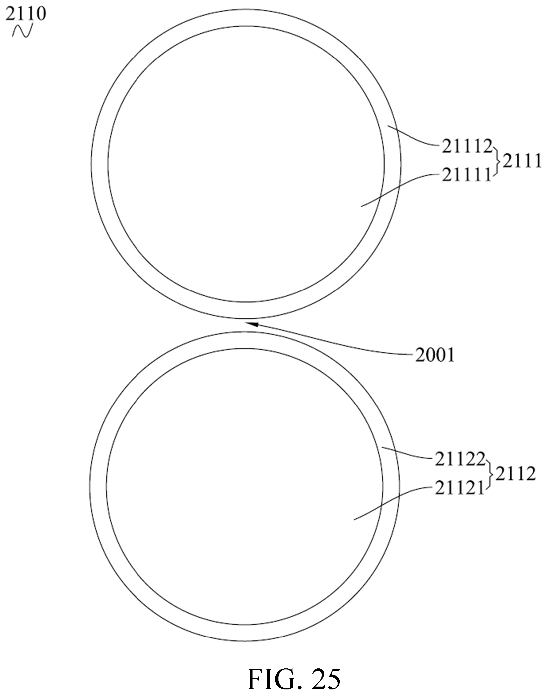

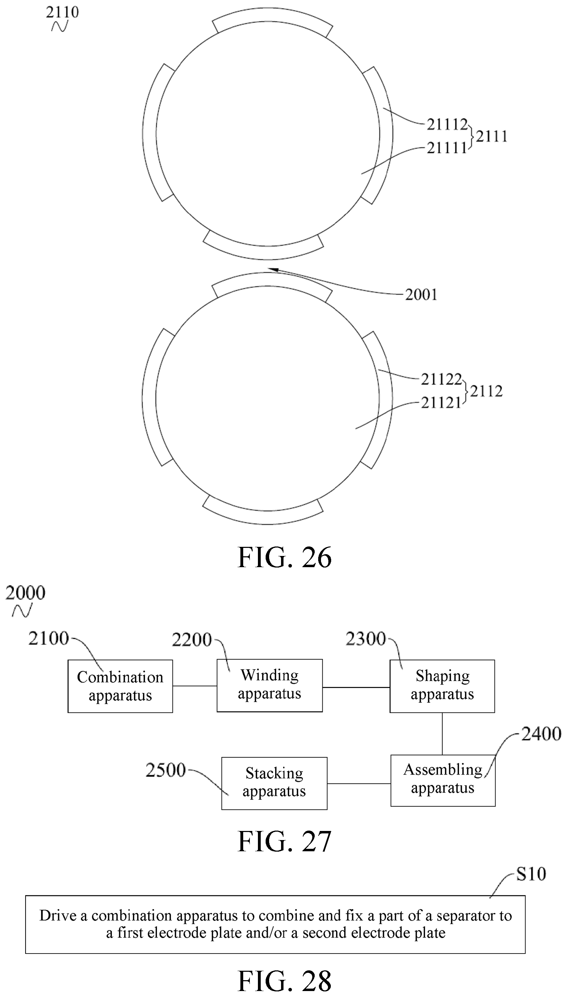

In some embodiments, refer to FIG. 25 and FIG. 26 together with reference to other accompanying drawings. FIG. 25 is a sectional view of a first combination roller 2111 and a second combination roller 2112 of a combination mechanism 2110 of a combination apparatus 2100 according to some embodiments of the present application, and FIG. 26 is a sectional view of a first combination roller 2111 and a second combination roller 2112 of a combination mechanism 2110 of a combination apparatus 2100 according to some other embodiments of the present application. FIG. 25 and FIG. 26 are both schematic diagrams of FIG. 24 along an axial view of the first combination roller 2111, and are also schematic diagrams of FIG. 24 along the first direction Z. In some possible designs, as shown in FIG. 25, first convex parts 21112 are continuously disposed on an outer peripheral side of the first rotating roller 21111 along a peripheral direction. Alternatively, in some other possible designs, as shown in FIG. 26, first convex parts 21112 are spaced apart on an outer peripheral side of the first rotating roller 21111 along a peripheral direction. Alternatively, in still some other possible designs, two groups of first convex parts 21112 are disposed on the first rotating roller 21111, and the two groups of first convex parts 21112 are spaced apart on the first rotating roller 21111 along the first direction Z. One group of first convex parts 21112 are continuously disposed on the outer peripheral side of the first rotating roller 21111, and the other group of first convex parts 21112 are spaced apart on the outer peripheral side of the first rotating roller 21111.

As shown in FIG. 25 and FIG. 19, the first convex parts 21112 are continuously disposed on the outer peripheral side of the first rotating roller 21111 along the peripheral direction. An example in which the first electrode plate 111 is combined with and fixed to the separator 113 is used. In this case, first composite structures a are continuously disposed on ends of the first electrode plate 111 along the first direction Z. There may be one or two groups of first convex parts 21112. When there are two groups of first convex parts 21112, the two groups of first convex parts 21112 are spaced apart along the first direction Z on the outer peripheral side of the first rotating roller 21111. That the second electrode plate 112 is combined with and fixed to the separator 113 may also be similarly explained.

As shown in FIG. 26 and FIG. 18, a plurality of first convex parts 21112 are spaced apart on the outer peripheral side of the first rotating roller 21111 along the peripheral direction. An example in which the first electrode plate 111 is combined with and fixed to the separator 113 is used. In this case, first composite structures a are spaced apart on ends of the first electrode plate 111 along the first direction Z. There may be one or two groups of first convex parts 21112. When there are two groups of first convex parts 21112, the two groups of first convex parts 21112 are spaced apart along the first direction Z on the outer peripheral side of the first rotating roller 21111. That the second electrode plate 112 is combined with and fixed to the separator 113 may also be similarly explained.

The two groups of first convex parts 21112 are spaced apart on the first rotating roller 21111 along the first direction Z. One group of first convex parts 21112 are continuously disposed on the outer peripheral side of the first rotating roller 21111, and the other group of first convex parts 21112 are spaced apart on the outer peripheral side of the first rotating roller 21111. It may be understood that, the first convex parts 21112 are disposed on both ends of the first rotating roller 21111 along the first direction Z, the first convex parts 21112 on one end of the first rotating roller 21111 along the first direction Z are continuously disposed on the outer peripheral side of the first rotating roller 21111 along the peripheral direction, and first convex parts 21112 on the other end of the first rotating roller 21111 along the first direction Z are spaced apart on the outer peripheral side of the first rotating roller 21111 along the peripheral direction. An example in which the first electrode plate 111 is combined with and fixed to the separator 113 is used. In this case, first composite structures a on one end of the first electrode plate 111 along the first direction Z are continuously disposed, and first composite structures a on the other end of the first electrode plate 111 along the first direction Z are spaced apart, as shown in FIG. 20. That the second electrode plate 112 is combined with and fixed to the separator 113 may also be similarly explained.

It should be further noted that, that the first convex parts 21112 are spaced apart on the outer peripheral side of the first rotating roller 21111 along the first direction Z and that one group of first convex parts 21112 are spaced apart on the outer peripheral side of the first rotating roller 21111 both mean that a plurality of first convex parts 21112 are spaced apart on the outer peripheral side of the first rotating roller 21111.

In this way, the first composite structure a formed through the combination operation can be disposed continuously or spaced apart, or the second composite structure b formed through the combination operation can be disposed continuously or spaced apart, so that a combination effect can be very flexible.

In some embodiments, refer to FIG. 25 and FIG. 26 together with reference to other accompanying drawings. In some possible designs, as shown in FIG. 25, second convex parts 21122 are continuously disposed on an outer peripheral side of the second rotating roller 21121 along a peripheral direction. Alternatively, in some other possible designs, as shown in FIG. 26, second convex parts 21122 are spaced apart on an outer peripheral side of the second rotating roller 21121 along a peripheral direction. Alternatively, in still some other possible designs, two groups of second convex parts 21122 are disposed on the second rotating roller 21121, and the two groups of second convex parts 21122 are spaced apart on the second rotating roller 21121 along the first direction Z. One group of second convex parts 21122 are continuously disposed on the outer peripheral side of the second rotating roller 21121, and the other group of second convex parts 21122 are spaced apart on the outer peripheral side of the second rotating roller 21121.

As shown in FIG. 25 and FIG. 19, the second convex parts 21122 are continuously disposed on the outer peripheral side of the second rotating roller 21121 along the peripheral direction. An example in which the first electrode plate 111 is combined with and fixed to the separator 113 is used. In this case, first composite structures a are continuously disposed on ends of the first electrode plate 111 along the first direction Z. There may be one or two groups of second convex parts 21122. When there are two groups of second convex parts 21122, the two groups of second convex parts 21122 are spaced apart along the first direction Z on the outer peripheral side of the second rotating roller 21121. That the second electrode plate 112 is combined with and fixed to the separator 113 may also be similarly explained.

As shown in FIG. 26 and FIG. 18, a plurality of second convex parts 21122 are spaced apart on the outer peripheral side of the second rotating roller 21121 along the peripheral direction. An example in which the first electrode plate 111 is combined with and fixed to the separator 113 is used. In this case, first composite structures a are spaced apart on ends of the first electrode plate 111 along the first direction Z. There may be one or two groups of second convex parts 21122. When there are two groups of second convex parts 21122, the two groups of second convex parts 21122 are spaced apart along the first direction Z on the outer peripheral side of the second rotating roller 21121. That the second electrode plate 112 is combined with and fixed to the separator 113 may also be similarly explained.

The two groups of second convex parts 21122 are spaced apart on the second rotating roller 21121 along the first direction Z. One group of second convex parts 21122 are continuously disposed on the outer peripheral side of the second rotating roller 21121, and the other group of second convex parts 21122 are spaced apart on the outer peripheral side of the second rotating roller 21121. It may be understood that, the second convex parts 21122 are disposed on both ends of the second rotating roller 21121 along the first direction Z, the second convex parts 21122 on one end of the second rotating roller 21121 along the first direction Z are continuously disposed on the outer peripheral side of the first rotating roller 21111 along the peripheral direction, and second convex parts 21122 on the other end of the second rotating roller 21121 along the first direction Z are spaced apart on the outer peripheral side of the second rotating roller 21121 along the peripheral direction. An example in which the first electrode plate 111 is combined with and fixed to the separator 113 is used. In this case, first composite structures a on one end of the first electrode plate 111 along the first direction Z are continuously disposed, and first composite structures a on the other end of the first electrode plate 111 along the first direction Z are spaced apart, as shown in FIG. 20. That the second electrode plate 112 is combined with and fixed to the separator 113 may also be similarly explained.

It should be further noted that, that the second convex parts 21122 are spaced apart on the outer peripheral side of the second rotating roller 21121 along the first direction Z and that one group of second convex parts 21122 are spaced apart on the outer peripheral side of the second rotating roller 21121 both mean that a plurality of second convex parts 21122 are spaced apart on the outer peripheral side of the second rotating roller 21121.

In this way, the first composite structure a formed through the combination operation can be disposed continuously or spaced apart, or the second composite structure b formed through the combination operation can be disposed continuously or spaced apart, so that a combination effect can be very flexible.

Based on the foregoing structure, it may be understood that, the first combination roller 2111 and the second combination roller 2112 cooperate, so that the combination apparatus 2100 performs combination operation in a rolling manner. The rolling manner may be cold pressing or hot pressing.

Refer to FIG. 12 to FIG. 27 together with reference to other accompanying drawings. FIG. 27 is a schematic diagram of a processing device 2000 according to some embodiments of the present application. The processing device 2000 provided in the embodiments of the present application is configured to process a battery 100, and the processing device 2000 includes a combination apparatus 2100. The combination apparatus 2100 in this embodiment is the same as the combination apparatus 2100 in the previous embodiment. For details, refer to related descriptions of the combination apparatus 2100 in the previous embodiment, and details are not described herein again.

The processing device 2000 provided in the embodiments of the present application uses the foregoing combination apparatus 2100, helping to improve charging and discharging performance of a battery 100, to improve kinetic performance of the battery 100.

In some embodiments, refer to FIG. 12 to FIG. 27 together with reference to other accompanying drawings. The processing device 2000 further include a winding apparatus 2200, and the winding apparatus 2200 is configured to wind the first electrode plate 111, the second electrode plate 112, and the separator 113 to form the electrode assembly 11.

The winding apparatus 2200 refers to an apparatus configured to wind the first electrode plate 111, the second electrode plate 112, and the separator 113 to form the electrode assembly 11.

In this way, the electrode assembly 11 can be obtained through winding.

In some embodiments, refer to FIG. 13 to FIG. 27 together with reference to other accompanying drawings. The processing device 2000 further includes a shaping apparatus 2300, and the shaping apparatus 2300 is configured to shape the electrode assembly 11 into a flat shape.

The shaping apparatus 2300 refers to an apparatus configured to shape the electrode assembly 11 into a flat shape.

In this way, a flat-shaped electrode assembly 11 can be obtained.

In some embodiments, refer to FIG. 27 with reference to other accompanying drawings. The processing device 2000 further includes an assembling apparatus 2400 and a stacking apparatus 2500. The assembling apparatus 2400 is configured to assemble the electrode assembly 11 to form the battery 100 cell. The stacking apparatus 2500 is configured to stack the battery 100 cell to form the battery 100.

The assembling apparatus 2400 refers to an apparatus configured to assemble the electrode assembly 11, a housing, and the like to form the battery 100 cell. The stacking apparatus 2500 refers to an apparatus configured to stack a plurality of battery 100 cells to form the battery 100.

In this way, the battery 100 can be obtained.

Refer to FIG. 28 with reference to other accompanying drawings. FIG. 28 is a flowchart of a combination method according to some embodiments of the present application. The combination method provided in the embodiments of the present application uses a combination apparatus 2100. The combination apparatus 2100 in this embodiment is the same as the combination apparatus 2100 in the previous embodiment. For details, refer to related descriptions of the combination apparatus 2100 in the previous embodiment, and details are not described herein again.

The combination method in the embodiments of the present application includes the following steps:
S10: Drive the combination apparatus 2100 to combine and fix a part of a separator 113 to a first electrode plate 111 and/or a second electrode plate 112.

Specifically, the separator 113 and the at least one of the first electrode plate 111 and the second electrode plate 112 may pass through the combination apparatus 2100 according to requirements, so that the combination apparatus 2100 performs combination operation on a part of an integrity formed by the separator 113 and the at least one of the first electrode plate 111 and the second electrode plate 112, thereby performing combination operation on a part of the separator 113.

The combination apparatus 2100 may perform combination operation on the separator 113 and the at least one of the first electrode plate 111 and the second electrode plate 112 by using one combination mechanism 2110, or may perform combination operation on the separator 113 and the at least one of the first electrode plate 111 and the second electrode plate 112 by using a plurality of combination mechanisms 2110.

In the combination method provided in the embodiments of the present application, by using the foregoing combination apparatus 2100, the combination operation is performed on only a part of the separator 113, so that other parts of the separator 113 are not used for performing combination operation. In this way, a problem of poor overall air permeability of the separator 113 can be relieved, helping to improve an ionic conducting capability of the separator 113, and further helping to improve charging and discharging performance of the battery 100 cell, to improve kinetic performance of the battery 100 cell.

In some embodiments, the driving the combination apparatus 2100 to combine and fix a part of a separator 113 to a first electrode plate 111 and/or a second electrode plate 112 (step S10) specifically includes the following step:
S11: Drive the first combination roller 2111 to rotate; or drive the second combination roller 2112 to rotate; or drive the first combination roller 2111 and the second combination roller 2112 to rotate. In this way, a first convex part 21112 on the first combination roller 2111 cooperates with the second combination roller 2112 to roll the separator 113 and at least one of the first electrode plate 111 and the second electrode plate 112.

In this way, the combination apparatus 2100 performs the rolling operation by using the first combination roller 2111 and the second combination roller 2112 in cooperation, so that the other parts of the separator 113 are not used for performing combination operation. In this way, a problem of poor overall air permeability of the separator 113 can be relieved, helping to improve an ionic conducting capability of the separator 113, and further helping to improve charging and discharging performance of the battery 100 cell, to improve kinetic performance of the battery 100 cell.

In some embodiments, before the driving the combination apparatus 2100 to combine a part of a separator 113 to a first electrode plate 111 and/or a second electrode plate 112 (step S10), the method further includes the following step:
S20: Dispose a first adhesive layer 12 on the separator 113, and/or dispose a second adhesive layer on the first electrode plate 111, and/or dispose a third adhesive layer on the second electrode plate 112. It may be understood that, three embodiments: disposing the first adhesive layer 12 on the separator 113, disposing the second adhesive layer on the first electrode plate 111, and disposing the third adhesive layer on the second electrode plate 112, may be freely selected and combined according to requirements.

It may be understood that, an example in which the first adhesive layer 12 is disposed on the separator 113 is used for description. In some possible designs, the separator 113 may be soaked in an adhesive groove, so that adhesive in the adhesive groove stays on the separator 113 and solidifies to form the first adhesive layer 12. In some other possible designs, the first adhesive layer 12 may alternatively be coated on the separator 113 in a coating manner. In still some other possible designs, the first adhesive layer 12 may further be adhered to the separator 113. Correspondingly, a similar solution may also be used for the manner of disposing the second adhesive layer on the first electrode plate 111 and disposing the third adhesive layer on the second electrode plate 112, and details are not described herein again.

In this way, the first adhesive layer 12 can be first disposed on the separator 113, and/or the second adhesive layer is disposed on the first electrode plate 111, and/or the third adhesive layer is disposed on the second electrode plate 112. Then, the separator 113 and the at least one of the first electrode plate 111 and the second electrode plate 112 pass through the combination apparatus 2100, so that the combination apparatus 2100 performs combination operation on the separator 113 and the at least one of the first electrode plate 111 and the second electrode plate 112, thereby achieving an effect of completing the combination operation on a part of the separator 113. In this way, the separator 113 can achieve a secure combination and fixing effect.

In an embodiment of the present application, as shown in FIG. 3, FIG. 4, and FIG. 7 to FIG. 9, the battery 100 cell include the electrode assembly 11, the electrode assembly 11 includes the first electrode plate 111, the second electrode plate 112, the first separator 113a, and the second separator 113b. The first separator 113a, the first electrode plate 111, the second separator 113b, and the second electrode plate 112 are sequentially stacked or stacked and wound. The first electrode plate 111 includes a first current collector 1111 and a first active layer 1112 disposed on the first current collector 1111. The second electrode plate 112 includes a second current collector 1121, a second active layer 1122, and an insulation layer 1123, the second active layer 1122 and the insulation layer 1123 are both disposed on the second current collector 1121, and the insulation layer 1123 is located on one end of the second active layer 1122 along the first direction Z. The first active layer 1112 extends beyond two opposite ends of the second active layer 1122 along the first direction Z, and the insulation layer 1123 extends beyond one end of the first active layer 1112 along the first direction Z. The first separator 113a and the second separator 113b each include a first film material 1131 and a second film material 1132, and the second film material 1132 is disposed on two opposite ends of the first film material 1131 along the first direction Z. The first film material 1131 is disposed opposite to the second active layer 1122, and the first film material 1131 is disposed opposite to a part of the first active layer 1112. The second film material 1132 on two opposite ends of the first separator 113a along the first direction Z is combined with and fixed to a part of the first active layer 1112 extending beyond the second active layer 1122 along the first direction Z. One side of the second film material 1132 of the second separator 113b is combined with and fixed to the part of the first active layer 1112 extending beyond the second active layer 1122 along the first direction Z, and the other side is combined with and fixed to the insulation layer 1123. In addition, the second film material 1132 on two opposite ends of the second separator 113b is combined with and fixed to the part of the first active layer 1112 extending beyond the second active layer 1122 along the first direction Z.

The foregoing descriptions are merely exemplary embodiments of the present application, but are not intended to limit the present application. Any modification, equivalent replacement, or improvement and the like made within the spirit and principle of the present application fall within the protection scope of the present application.

## Claims

1. A battery cell (10), comprising an electrode assembly (11), wherein the electrode assembly (11) comprises a first electrode plate (111), a second electrode plate (112), and a separator (113), and the first electrode plate (111) and the second electrode plate (112) are alternately stacked or are alternately stacked and wound; and at least a part of the separator (113) is disposed between the first electrode plate (111) and the second electrode plate (112), and the part of the separator (113) is combined with and fixed to the first electrode plate (111) and/or the second electrode plate (112).

2. The battery cell (10) according to claim 1, wherein the first electrode plate (111) comprises a first current collector (1111) and a first active layer (1112) disposed in the first current collector (1111), and the second electrode plate (112) comprises a second current collector (1121) and a second active layer (1122) disposed in the second current collector (1121); the separator (113) comprises a first film material (1131) and a second film material (1132) disposed on an end side of the first film material (1131) along a first direction (Z), the first film material (1131) is disposed separately opposite to the first active layer (1112) and the second active layer (1122), and the second film material (1132) is located outside an end side of the first active layer (1112) and/or the second active layer (1122) along the first direction (Z), and is at least partially combined with and fixed to the first electrode plate (111) and/or the second electrode plate (112); and the first direction (Z) is parallel to the first electrode plate (111) and the second electrode plate (112).

3. The battery cell (10) according to claim 2, wherein the first active layer (1112) extends beyond the second active layer (1122) along the first direction (Z), and the second film material (1132) is located outside an end side of the second active layer (1122) along the first direction (Z).

4. The battery cell (10) according to claim 3, wherein at least a part of the second film material (1132) is combined with and fixed to a part of the first active layer (1112) extending beyond the second active layer (1122) along the first direction (Z).

5. The battery cell (10) according to claim 4, wherein one side or two opposite sides of at least a part of the first active layer (1112) extending beyond the second active layer (1122) along the first direction (Z) are combined with and fixed to the second film material (1132).

6. The battery cell (10) according to claim 4 or 5, wherein a part of the first active layer (1112) extending beyond one end of the second active layer (1122) along the first direction (Z) is combined with and fixed to the second film material (1132); or a part of the first active layer (1112) extending beyond two opposite ends of the second active layer (1122) along the first direction (Z) is combined with and fixed to the second film material (1132).

7. The battery cell (10) according to any one of claims 3 to 6, wherein the second electrode plate (112) further comprises an insulation layer (1123) disposed in the second current collector (1121), and the insulation layer (1123) is disposed on an end side of the second active layer (1122) along the first direction (Z), extends beyond the first active layer (1112) along the first direction (Z), and is opposite to the second film material (1132).

8. The battery cell (10) according to claim 7, wherein at least a part of the second film material (1132) is combined with and fixed to the insulation layer (1123).

9. The battery cell (10) according to claim 8, wherein one side or two opposite sides of at least a part of the insulation layer (1123) are combined with and fixed to the second film material (1132).

10. The battery cell (10) according to any one of claims 7 to 9, wherein a second tab (11211) is disposed on the second current collector (1121), and the second tab (11211) is located outside one end of the second active layer (1122) along the first direction (Z); and in the first direction (Z), the insulation layer (1123) is located between the second active layer (1122) and the second tab (11211).

11. The battery cell (10) according to any one of claims 2 to 10, wherein a first tab (11111) is disposed on the first current collector (1111), the first tab (11111) is disposed on one end of the first active layer (1112) along the first direction (Z), and the second tab (11211) is disposed on the second current collector (1121); and the second tab (11211) is located on one end of the second active layer (1122) close to the first tab (11211) along the first direction (Z), or the second tab (11211) is located on one end of the second active layer (1122) far away from the first tab (11111) along the first direction (Z).

12. The battery cell (10) according to any one of claims 2 to 11, wherein one side of at least a part of the second film material (1132) is combined with and fixed to the first electrode plate (111) or the second electrode plate (112); and/or
two opposite sides of at least a part of the second film material (1132) are respectively combined with and fixed to the first electrode plate (111) and the second electrode plate (112).

13. The battery cell (10) according to any one of claims 2 to 12, wherein the second film material (1132) is disposed on two opposite ends of the first film material (1131) along the first direction (Z), and the second film material (1132) on each end of the first film material (1131) along the first direction (Z) is combined with and fixed to the first electrode plate (111) and/or the second electrode plate (112).

14. The battery cell (10) according to any one of claims 2 to 13, wherein the second film material (1132) is combined with the first electrode plate (111) to form a first composite structure (a); and first composite structures (a) on ends of the first electrode plate (111) in the first direction (Z) are spaced apart or are continuously disposed, or the first electrode plate (111) forms two groups of first composite structures (a) that are spaced apart along the first direction (Z), one group of first composite structures (a) are spaced apart, and the other group of first composite structures (a) are continuously disposed.

15. The battery cell (10) according to any one of claims 2 to 14, wherein the second film material (1132) is combined with the second electrode plate (112) to form a second composite structure (b), and second composite structures (b) are spaced apart or are continuously disposed.

16. The battery cell (10) according to any one of claims 1 to 15, wherein the separator (113) comprises a substrate (1133) and a bonding layer (1134) disposed on two opposite sides of the substrate (1133), and the separator (113) is adhered to the first electrode plate (111) and/or the second electrode plate (112) through the bonding layer (1134), to be combined with and fixed to the first electrode plate (111) and/or the second electrode plate (112); and/or
the electrode assembly (11) further comprises a first adhesive layer (12) disposed on the separator (113), and the separator (113) is adhered to the first electrode plate (111) and/or the second electrode plate (112) through the first adhesive layer (12), to be combined with and fixed to the first electrode plate (111) and/or the second electrode plate (112); and/or
the electrode assembly (11) further comprises a second adhesive layer disposed on the first electrode plate (111), and the first electrode plate (111) is adhered to the separator (113) through the second adhesive layer, to be combined with and fixed to the separator (113); and/or
the electrode assembly (11) further comprises a third adhesive layer disposed on the second electrode plate (112), and the second electrode plate (112) is adhered to the separator (113) through the third adhesive layer, to be combined with and fixed to the separator (113).

17. The battery cell (10) according to any one of claims 1 to 16, wherein the first electrode plate (111) and the second electrode plate (112) are stacked and wound, and the electrode assembly (11) is in a flat shape or a cylindrical shape.

18. A battery (100), comprising the battery cell (10) according to any one of claims 1 to 17.

19. An electrical apparatus, comprising the battery cell (10) according to any one of claims 1 to 17 or the battery (100) according to claim 18.

20. A combination apparatus (2100), applied to the battery cell (10) according to any one of claims 1 to 17, wherein the combination apparatus (2100) is configured to combine and fix a part of the separator (113) to the first electrode plate (111) and/or the second electrode plate (112).

21. The combination apparatus (2100) according to claim 20, wherein the combination apparatus (2100) comprises a combination mechanism (2110) configured to perform combination operation; and there is one combination mechanism (2110), or there are a plurality of combination mechanisms (2110), and the plurality of combination mechanisms (2110) are configured to sequentially perform combination operation.

22. The combination apparatus (2100) according to claim 21, wherein the combination mechanism (2110) comprises a first combination roller (2111) and a second combination roller (2112), the first combination roller (2111) comprises a first rotating roller (21111) and a first convex part (21112) disposed on an outer peripheral side of the first rotating roller (21111), the first convex part (21112) and the second combination roller (2112) are configured to cooperate to perform rolling combination operation, the first convex part (21112) and the second combination roller (2112) are spaced to form a rolling gap (2001), and the first convex part (21112) and the first rotating roller (21111) define a first avoidance space (2002) communicating with the rolling gap (2001).

23. The combination apparatus (2100) according to claim 22, wherein the second combination roller (2112) comprises a second rotating roller (21121) and a second convex part (21122) disposed on an outer periphery of the second rotating roller (21121), and the second convex part (21122) and the first convex part (21112) are disposed oppositely, and are spaced apart to form the rolling gap (2001); and the second convex part (21122) and the second rotating roller (21121) define a second avoidance space (2003) communicating with the rolling gap (2001).

24. The combination apparatus (2100) according to claim 22 or 23, wherein the first convex part (21112) is continuously disposed on the outer peripheral side of the first rotating roller (21111) along a peripheral direction; or first convex parts (21112) are spaced apart and disposed on the outer peripheral side of the first rotating roller (21111) along a peripheral direction; or the first rotating roller (21111) is provided with two groups of first convex parts (21112) that are spaced apart, wherein one group of first convex parts (21112) are continuously disposed on the peripheral side of the first rotating roller (21111) along the peripheral direction, and the other group of first convex parts (21112) are spaced apart and disposed on the peripheral side of the first rotating roller (21111) along the peripheral direction.

25. The combination apparatus (2100) according to claim 23, wherein the second convex part (21122) is continuously disposed on the outer peripheral side of the second rotating roller (21121) along a peripheral direction; or second convex parts (21122) are spaced apart and disposed on the outer peripheral side of the second rotating roller (21121) along a peripheral direction; or the second rotating roller (21121) is provided with two groups of second convex parts (21122) that are spaced apart, wherein one group of second convex parts (21122) are continuously disposed on the peripheral side of the second rotating roller (21121) along the peripheral direction, and the other group of second convex parts (21122) are spaced apart and disposed on the peripheral side of the second rotating roller (21121) along the peripheral direction.

26. A processing device (2000), configured to process a battery (100), wherein the processing device (2000) comprises the combination apparatus (2100) according to any one of claims 20 to 25.

27. The processing device (2000) according to claim 26, wherein the processing device (2000) further comprises:
a winding apparatus (2200), configured to wind the first electrode plate (111), the second electrode plate (112), and the separator (113) to form the electrode assembly (11).

28. The processing device (2000) according to claim 27, wherein the processing device (2000) further comprises a shaping apparatus (2300), and the shaping apparatus (2300) is configured to shape the electrode assembly (11) into a flat shape.

29. The processing device (2000) according to claim 27 or 28, wherein the processing device (2000) further comprises:
an assembling apparatus (2400), configured to assemble the electrode assembly (11) to form the battery cell (10); and
a stacking apparatus (2500), configured to stack the battery cell (10) to form a battery (100).

30. A combination method, using the combination apparatus (2100) according to any one of claims 20 to 25, wherein the combination method comprises:
driving the combination apparatus (2100) to combine and fix the part of the separator (113) to the first electrode plate (111) and/or the second electrode plate (112).

31. The combination method according to claim 30, wherein the driving the combination apparatus (2100) to combine and fix the part of the separator (113) to the first electrode plate (111) and/or the second electrode plate (112) comprises:
driving a first combination roller (2111) and/or a second combination roller (2112) to rotate, so that a first convex part (21112) on the first combination roller (2111) cooperates with the second combination roller (2112) to roll the separator (113) and at least one of the first electrode plate (111) and the second electrode plate (112).

32. The combination method according to claim 30 or 31, wherein before the driving the combination apparatus (2100) to combine the part of the separator (113) to the first electrode plate (111) and/or the second electrode plate (112), the method further comprises:
disposing a first adhesive layer (12) on the separator (113), and/or disposing a second adhesive layer on the first electrode plate (111), and/or disposing a third adhesive layer on the second electrode plate (112).
